# EUROPEAN PATENT APPLICATION

(11) **EP 4 834 106 A1**
(43) Date of publication of application: **04.11.2026**
(21) Application number: 26170588.3
(22) Date of filing: 02.04.2026
(51) Int. Cl.: A01M 7/00, A01M 21/04, B05B 12/12, G06V 20/10

(54) **AGRICULTURAL APPLICATION MACHINE**

(30) Priority: 30.04.2025 US 202563797729 P; 30.03.2026 US 202619633495
(71) Applicant: Deere & Company, Moline, IL 61265 (US)
(72) Inventor: Humpal, Richard A, 68163 Mannheim (DE); Urbandale, Tarik Loukili, 68163 Mannheim (DE); Moree, Broughton C. Boydell, 68163 Mannheim (DE); West, Ankeny, 68163 Mannheim (DE); Buse, Scott M., 68163 Mannheim (DE); Hansen, Christian G., 68163 Mannheim (DE); Rees, Steven, 68163 Mannheim (DE); Sandholm, Kurtis R., 68163 Mannheim (DE)
(74) Representative: Reichert, Christian

(57) **Abstract**

An agricultural application machine (100) is disclosed. The agricultural application machine (100) comprising: a material reservoir (110); a pump (184) configured to pump a material from the material reservoir (110); a nozzle body (120); a sensor (122) configured to capture an image of a portion of a field ahead of the nozzle body (120) relative to a direction of travel of the agricultural application machine (100); one or more processors (150, 224, 324, 620); and memory (151, 226, 326, 624) storing instructions executable by the one or more processors (150, 224, 324, 620) that, when executed by the one or more processors (150, 224, 324, 620), configure the agricultural application machine (100) to: identify (804) based, at least, on the image, a target in the image; identify (804) based, at least, on the image, a phytometric parameter value of the target in the image; determine (810) a target application rate based, at least, on the phytometric parameter value of the target in the image; and control (812) one or more of the pump (184) and the nozzle body (120) based, at least, on the target application rate.

## Description

### FIELD OF THE DESCRIPTION

The present description relates to the application of material to a worksite. More specifically, the present description relates to an agricultural application machine that applies material to an agricultural worksite, using real-time, on-machine, target sensing and real-time, on-machine, target phytometric parameter sensing.

### BACKGROUND

Agricultural applicators, such as agricultural sprayers, dry spreaders, and other types of agricultural applicators apply material, such as chemicals and nutrients, to agricultural worksites (e.g., fields). The material may be dry or liquid materials and can be applied for a number of reasons. For instance, the materials that are applied to a worksite may be pesticides, herbicides, fungicides, growth regulators, fertilizers, water, among others.

The discussion above is merely provided for general background information and is not intended to be used as an aid in determining the scope of the claimed subject matter.

### SUMMARY

An agricultural application machine includes a material reservoir, a pump configured to pump a material from the material reservoir, a nozzle body, and a sensor configured to capture an image of a portion of a field ahead of the nozzle body relative to a direction of travel of the agricultural application machine. The agricultural application machine further includes one or more processors and memory storing instructions that, when executed by the one or more processors, configure the agricultural application machine to: identify based, at least, on the image, a target in the image; identify based, at least, on the image, a phytometric parameter value of the target in the image; determine a target application rate based, at least, on the phytometric parameter value of the target in the image; and control one or more of the pump and the nozzle body based on the target application rate.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. The claimed subject matter is not limited to implementations that solve any or all disadvantages noted in the background.

### BRIEF DESCRIPTION OF THE DRAWINGS

FIG. 1A is a pictorial view of an agricultural application machine.
FIG. 1B is a pictorial view illustrating movement of a boom on an agricultural application machine.
FIG. 1C is a block diagram showing one example of the agricultural application machine in more detail.
FIG. 1D shows how the region of interest of a sensor changes relative to a field of view of the sensor at two different sensor heights above the ground.
FIG. 2 is a partial block diagram, partial schematic diagram of a computing system architecture used in an agricultural application machine.
FIG. 3 is a block diagram of one example of a processing module.
FIG. 4 is a block diagram of one example of a nozzle body controller.
FIGS. 5A, 5B, 5C, and 5D are pictorial illustrations showing examples of target application rate data useable to determine target application rates.
FIG. 6 is partial block diagram, partial schematic diagram of one example agricultural application system.
FIG. 7 is a block diagram of one example of an interface.
FIG. 8 is a pictorial illustration showing one example of the interface of FIG. 7.
FIG. 9 is a pictorial illustration showing one example of the interface of FIG. 7.
FIG. 10 shows a flow diagram illustrating one example of the operation of agricultural application system.
FIG. 11 is a block diagram showing one example of the agricultural system, deployed in a remote server environment.
FIGS. 12, 13, and 14 show examples of mobile devices that can be used in the agricultural application system illustrated in previous figures.
FIG. 15 is a block diagram showing one example of a computing environment that can be used in the agricultural application system illustrated in previous figures.

### DETAILED DESCRIPTION

For the purpose of promoting an understanding of the principles of the present disclosure, reference will now be made to the examples illustrated in the drawings, and specific language will be used to describe the same. It will nevertheless be understood that no limitation of the scope of the disclosure is intended. Any alterations and further modifications to the described devices, systems, methods, and any further application of the principles of the present disclosure are fully contemplated as would normally occur to one skilled in the art to which the disclosure relates. In particular, it is fully contemplated that the features, components, and/or steps described with respect to one example can be combined with the features, components, and/or steps described with respect to other examples of the present disclosure.

Some current agricultural application machines apply product uniformly across a worksite (e.g., field, etc.), regardless of any specific localized needs. This approach, sometimes referred to as a "broadcast" approach, can result in the application of material where it is not required. This increases production costs and can have a potentially negative environmental impact. In some cases where herbicide is applied, for instance, up to 80% of the total product is applied where it is not needed.

Also, some current systems attempt to generate prescriptions indicating where and how to apply material to the worksite. However, the prescription is created ahead of time (prior to the application process by which the agricultural applicator applies the material to the worksite). The prescription is then used (e.g., loaded into the agricultural applicator, etc.) in controlling the agricultural application machine to apply the material to the worksite.

Although this process may reduce the amount of material being applied, as compared to a broadcast application operation, it has significant limitations. For instance, because the data used to generate such prescriptions are obtained through manual scouting or through imagery, or through past worksite history, the data are subject to georeferencing and application errors. Therefore, the locations of the particular targets of the material application may not be precisely defined. This, in turn, means that larger application zones around the targets are used in order to ensure that the desired targets are indeed covered by the material being applied.

A problem with data collection from aerial images is that the image quality is often not adequate to identify targets, such as pests or weeds. The image quality issues are normally attributed to the sensor system (e.g., resolution, etc.) used for capturing the images, the height at which the images were taken or the distance from the targets at which the images were taken, lighting conditions, cloud cover, obscurants, and other atmospheric conditions. Similarly, because these types of images and other data collection processes are performed hours or even days or weeks ahead of the application process, conditions may have changed, so that the prescription will not be based on accurate conditions (e.g., reflective of the current conditions). Further, in some instances, even when desired, aerial imagery may not be available close enough in time to an upcoming operation to be used in generating a prescription. For instance, satellites may not be available to provide imagery for a given worksite within a defined period of time.

Some current systems utilize sensors (e.g., cameras) on-board the agricultural applicator to locate targets on the worksite and selectively apply material based on the located targets (e.g., to the targets, between the targets, etc.). This form of application is sometimes referred to as "select" or "targeted" application. However, though such systems reduce the amount of material applied, as compared to a broadcast application operation, they do not provide for varying the rate of material applied based on real-time detection of phytometric parameter(s) of targets and thus, even though material may be applied more specifically based on localization of targets the amount of material applied may be more or less than desirable given the phytometric parameter(s) of targets. For instance, depending on the phytometric parameter(s) of a target, more or less material may be desired. Phytometric parameters can include biomass, width, height, volume, spectral response, as well as other parameters. Phytometric parameters can be expressed with values, or phytometric values, such as biomass values, width values, height values, volume values, spectral response values, as well as values of other phytometric parameters. Targets can include crop plants (crops), weed plants (weeds), crop rows, crop groupings, as well as other plant targets.

The present description thus proceeds with respect to an agricultural application system that provides real-time, on-board target identification and phytometric parameter identification as well as control to vary the material application rate based, at least, on the identified targets and identified phytometric parameter(s) of targets. The material application system captures sensor data (e.g., image(s)) of an area ahead of the agricultural application machine (e.g. relative to a direction of travel or to a planned route), such as with sensors (e.g., camera(s), etc.) on-board an agricultural application machine, and processes the sensor data to identify targets and phytometric parameter(s) of the identified targets in time for applicator functionality on the agricultural application machine to apply a material based on those identified targets and phytometric parameter(s) at the desirable, and controllably variable, rate. Additionally, the agricultural application system provides for high resolution target and target phytometric parameter identification such that targets and phytometric parameters of targets can be identified on an individual application unit (e.g., boom section, individual nozzle body, etc.) level and such that subsequent and individual control of the separate application units can be performed based on the identifications (targets and phytometric parameters of the targets) corresponding to each of the separate application units.

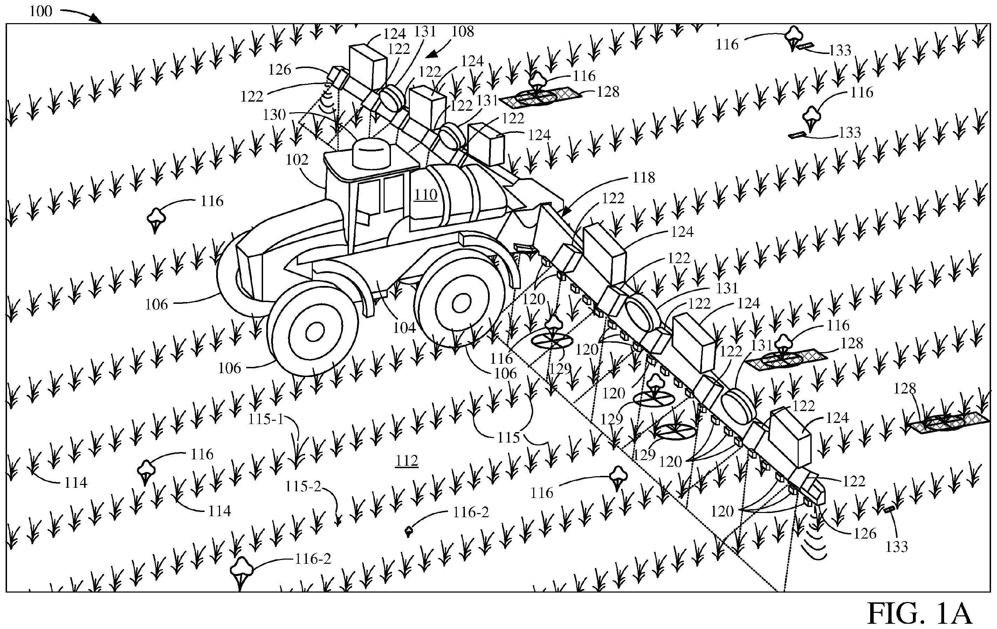

FIG. 1A shows a pictorial illustration of one example of an agricultural application machine 100 (hereinafter also referred to as agricultural machine 100 or machine 100). Agricultural machine 100 is depicted as an agricultural sprayer that has an operator compartment 102, supported by a frame structure 104, which also supports ground engaging traction elements 106. In the example shown in FIG. 1A, ground engaging traction elements 106 are wheels and tires, but they could be tracks or other implementations. FIG. 1A also shows that agricultural machine 100 has a spray system generally indicated by 108. Spray system 108 illustratively includes one or more tanks (or other material reservoir(s)) 110 that carry material(s) that are to be applied to an agricultural worksite 112. In some examples, the spray system 108 can carry a plurality of different materials, each in a different tank 110. In some examples, material (e.g., chemical product) from one tank 110 may be mixed with material (e.g., water) from another tank 110, such as by controlling flow of material from each tank 110 to a common volume (e.g., conduit, line, mixing chamber, etc.). In some examples, multiple tanks 110 may contain the same material but each having the same material at a different concentration.

In the example shown in FIG. 1A, agricultural worksite 112 has row crops, planted in rows 114, and a plurality of weeds 116 that are growing therein. Additionally, while FIG. 1A shows machine 100 in a worksite with rows 114 of crops 115, the present description can also proceed with an example in which machine 100 is treating an area, with non-row crops (seeded or drilled crops, which can also be referred to as crop groupings), or an area without crops, such as a worksite after harvest and before planting, or another area without crops.

Spray system 108 also illustratively includes a boom structure 118 that supports a plurality of controllable nozzle bodies 120. Nozzle bodies 120 can include (as shown in more detail below) an electronic controller that receives commands over a network, such as a controller area network - CAN, or other data communication protocols. A nozzle body 120 can also include one or more controllable actuators (e.g., valves, etc.) that can be moved between an open position and a closed position. A nozzle body 120 can also include one or more outlets (e.g., one or more nozzle spray control tips). Material to be applied by machine 100 is pumped by one or more pumps (e.g., 184) from one or more tanks 110, through hoses or other conduits, to the nozzle bodies 120. The controller in the nozzle bodies 120 controls the controllable actuators (e.g., valves, etc.) to open (or the on position) so that the material moves through the nozzle body and out through the outlet (e.g., nozzle spray control tip) whereby the material is applied to the worksite 112. When the actuator (e.g., valve, etc.) is controlled to be in the closed position (or the off position) the material does not pass through the actuator (e.g., valve) and thus, does not pass through the outlet (e.g., nozzle spray control tip). In one example, the actuators (e.g., valves) are variable between the on and off positions, such as in the case of proportional actuators (e.g., valves). In other examples, a variable flow rate can be achieved through the actuators (e.g., valves) by controlling the one or more pumps (e.g., 184) or by controlling the actuators (e.g., valves) in a pulse width modulated manner (varying the cycle time) or in other intermittent ways. In some examples, each controller in the nozzle bodies 120 can be provided with a target application rate (TAR) command that is converted by the controller into a pulse width modulation (PWM) command. The PWM command varies the cycle time (or duty cycle) to control the duration for which a corresponding valve is open and closed to vary the application rate of material (corresponding to the TAR command) while maintaining a desired pressure. This allows for consistent droplet size and speed while varying the application rate.

FIG. 1A also shows that machine 100 is fitted with a plurality of different sensors 122 (shown as cameras in FIG. 1A). Sensors 122 can include cameras, ultrasound sensors, lidar sensors, radar sensors, as well as other sensors. The cameras can be Red Green Blue (RGB) cameras, Near Infra-Red Red Green (NRG) cameras, Near Infra-Red (NIR) cameras, Multispectral cameras, Hyperspectral cameras, a mono camera, a stereo camera, or a variety of other cameras. The sensors 122 can capture sensor data (e.g., images) by sensing waves (e.g., electromagnetic radiation waves (e.g., radiation in the electromagnetic spectrum), sound waves, etc.). In some examples, the sensors include a transmitter that transmits waves (e.g., EM radiation, sound waves, etc.) towards objects in the environment and a receiver that receives the reflected waves. The sensors 122 are disposed along the boom so that they have fields of view that cover the length of the ground in front of the boom 118. For instance, the image sensors 122 are disposed across boom 118 so that their fields of view cover all of the area of worksite 112 forward of nozzle bodies 120, as agricultural machine 100 travels through the worksite.

The sensors 122 are illustratively coupled to one or more processing modules 124 (e.g., image processing modules). The processing modules 124 (e.g., image processing modules) illustratively process the sensor data (e.g., images) captured by sensors 122 to identify targets (e.g., plants, such as weeds (e.g., weeds 116), crops (e.g., crops 115 in rows 114, or non-row crops (can be called crop groupings)), or rows (e.g., rows 114) on worksite 112 over which machine 100 is traveling as well as to identify an phytometric parameter(s) (e.g., biomass, width, height, volume, spectral response, etc.) of targets. As can be seen, the phytometric parameters of targets across the worksite 112 may vary, as indicated by crop 115-1, crop 115-2, weed 116-1, and weed 116-2. Sensors 122 can have a processing system (e.g., an image processing system) that performs some preprocessing. For instance, different sensors 122 (e.g., cameras) may be different so the on-sensor (e.g., on-camera) processing system (e.g., image processing system) may generate color correction matrices that adjust or calibrate the sensor (e.g., camera) so all sensors (e.g., cameras) produce images of the same color. The on-board processing system (e.g., image processing system) can also perform other processing, such as lens shading correction, local tone mapping, demosaic, color correction, and distortion correction. The correction information can be captured in correction matrices or in other ways. Some or all of the pre-processing can be performed on the processing modules 124 (e.g., image processing modules) as well.

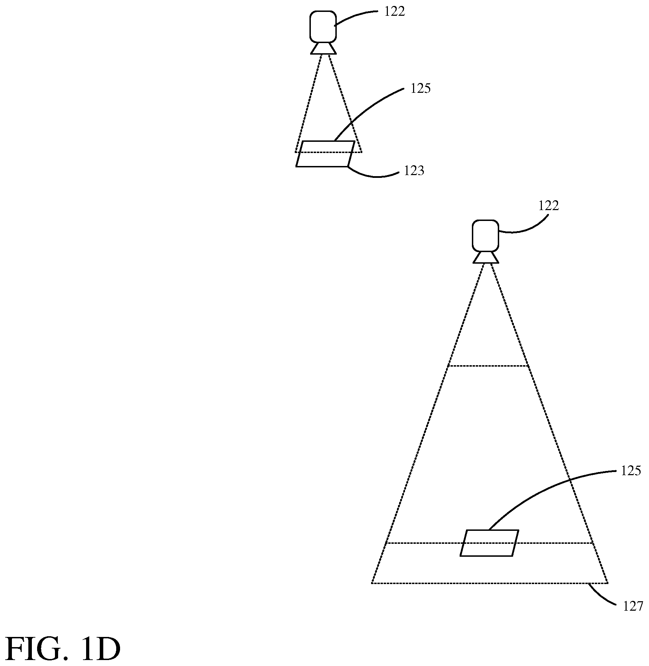

It will be noted that, in one example, the position of boom 118 (and in particular the position of each sensor 122) relative to the surface of worksite 112, may change the field of view of the sensors 122. For example, FIG. 1D shows a sensor 122 and its corresponding image width at two different heights. At the first height, the field of view has an image width shown generally at 123. The area or region of interest 125 being analyzed for targets takes up most of the field of view 123. However, when sensor 122 is moved to a greater height (further from the ground), then the width of the region on the ground that is included in the field of view of sensor 122 is indicated by 127. Still, the area being examined for targets is represented by area 125.

Therefore, in one example, boom 118 has one or more boom sensors 126 that sense the height (in another implementation, sensor 126 can also or alternatively sense the angle and/or boom vibrations) of boom 118 relative to the surface of worksite 112 over which it is traveling. The boom height (and boom angle) can be used by processing modules 124 (e.g., image processing modules) to correct the sensor data (e.g., images) received from the various sensors 122, based upon their location relative to the ground from which the sensor data (e.g., images) are captured. Thus, in one example, the processing modules 124 identify targets (e.g., plants or plant matter, such as weeds 116, crops 115, rows 114, or crop groupings) as targets of a material being applied by machine 100 and transmit information about the location of the targets and the phytometric parameter(s) of the targets to a controller so that the controller can control the actuators (e.g., valves) in the nozzle bodies 120 to apply the material to a desirable location (treatment area) relative the targets and at a desirable application rate. In one example, the nozzle bodies 120 are controlled to apply the material in a treatment area 128 that has a buffer area on either side of a target to increase the likelihood that the target 116 is treated by the applied material. In another example, the nozzle bodies 120 are controlled to apply the material in a treatment area 129 that is more targeted to the location of the target (e.g., has no buffer area or has less of a buffer area than the example of treatment area 128). In another example, the nozzle bodies 120 are controlled to apply the material in a treatment area that is between targets (or after or before a target) as indicated by treatment area 133.

Sensor data (e.g., image) processing may be affected by ambient light conditions. Therefore, FIG. 1A also shows that boom 118 may have one or more supplemental light sources 131 which can be activated in low light conditions (e.g., at night, cloudy day, etc.).

Also, in order to process the sensor data (e.g., images) in various different types of light conditions (which may change based on whether machine 100 is heading into the sun, away from the sun, or otherwise), FIG. 1A shows that machine 100 can have a white balance camera or an incidental light sensor (light sensor 130). Light sensor 130 can sense the direction of the sun relative to agricultural machine 100, the color of the sun (such as whether the sky is overcast, whether machine 100 is traveling through a shadow, or other conditions that change the color of the light), and the light intensity among other things. Similarly, light sensors 130 may be disposed at one or more locations along boom 118 instead of, or in addition to, light sensor 130 on the body of the machine 100, as shown in FIG. 1A. The ambient lighting conditions are sensed by light sensor(s) 130 and the information representing the ambient lighting conditions is sent to processing modules 124 (e.g., image processing modules). The data can be sent using data over power transmission, using a gigabit multimedia serial link (GMSL or GMSL2) or using another communication mechanism. The feedback from the light sensors 130 can be used to control activation of supplemental light sources 131 as well.

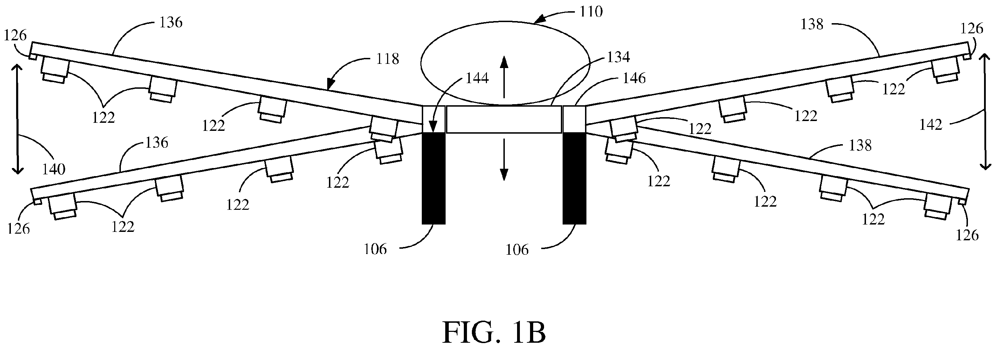

FIG. 1B shows a pictorial illustration of a rear view of machine 100, and items that are similar to those shown in FIG. 1A are similarly numbered. FIG. 1B shows that boom 118 can have a central boom section 134 and one or more boom arms 136 and 138 on either side of central boom section 134. In one example, central boom section 134 can be raised and lowered under force of a central boom actuator (not shown in FIG. 1B). As shown in FIG. 1B, boom arms 136 and 138 may rotate about pivot points 144 and 146, respectively. Thus, the sensors 122 may not simply be traveling in a vertical direction when boom arms 136 and 138 are raised and lowered, but they are moving in an arc about pivot points 144 and 146. This can cause the orientation of the sensors 122 to be focused more inwardly, toward a central axis of machine 100, or outwardly, away from machine 100. Thus, as the boom 118 moves, the perspectives of the sensors 122, and thus the fields of view of the sensors 122 on the ground, will move as well. Similarly, as machine 100 travels through the worksite, it may encounter bumps, ruts, or other disturbances on the ground. This may cause the boom arms 136 and 138 to move upwardly or downwardly in the directions indicated by arrows 140 and 142. Therefore, in one example, the sensors 122 are calibrated at different heights from the ground (e.g., at different boom positions). A calibration transform is generated that can be used to transform the captured sensor data (e.g., images) so that the area of interest (or region of interest - ROI) within the sensor data (e.g., images) captured by each sensor 122 remains at a fixed location on the ground relative to the corresponding sensor 122 (e.g., one meter in front of the sensor 122 in the direction of travel), regardless of the boom position.

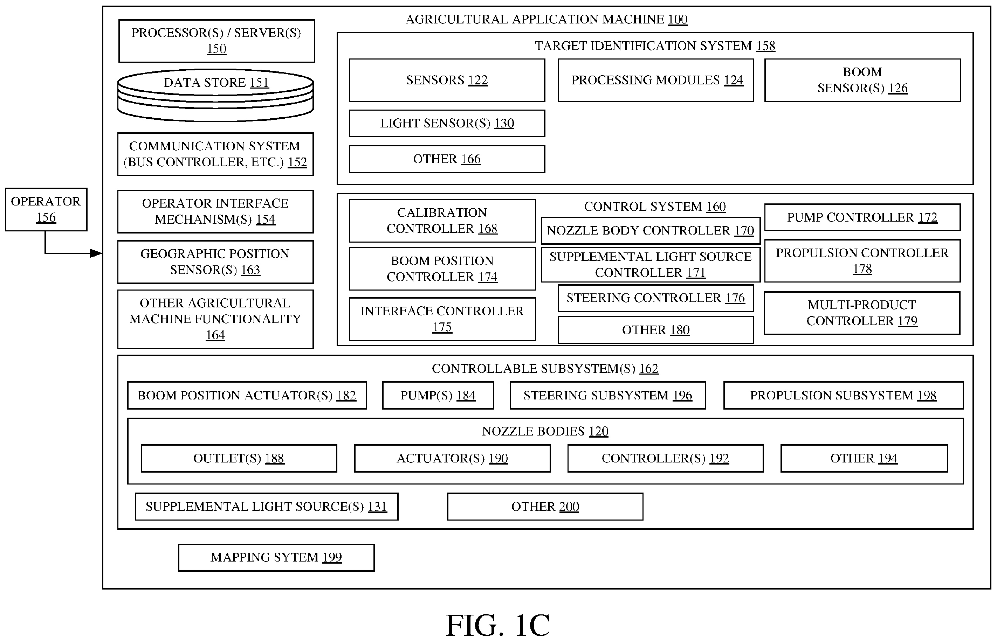

FIG. 1C is a block diagram showing some portions of machine 100 in more detail. Some of the items shown in FIG. 1C are similar to those shown in FIGS. 1A and 1B and they are similarly numbered. FIG. 1C shows that machine 100 can also include one or more processors or servers 150, data store 151, a communication system 152, one or more operator interface mechanisms 154 that an operator 156 can interact with in order to control and manipulate agricultural machine 100, target identification system 158, control system 160, controllable subsystems 162, one or more geographic position sensors 163, mapping system 199, and machine 100 can include a wide variety of other agricultural machine functionality 164. Target identification system 158 can include sensors 122, processing modules 124, light sensors 130, boom height/angle sensors 126, and it can include other items 166. Control system 160 can include calibration controller 168, nozzle body controller 170, supplemental light source controller 171, pump controller 172, boom position controller 174, interface controller 175, steering controller 176, propulsion controller 178, and multi-product controller 179. Control system 160 can also include other items 180. Controllable subsystems 162 can include boom position actuators 182, one or more pumps 184, supplemental light sources 131, nozzle bodies 120 (which, themselves, can include one or more outlets (e.g., nozzle tips) 188, actuators (e.g., valves) 190, actuator (e.g., valve) controllers 192, and other items 194), steering subsystem 196, propulsion subsystem 198, and a wide variety of other items 200.

Before describing the overall operation of machine 100, a brief description of some of the items shown in FIG. 1C, and their operation, will first be provided. Operator interface mechanisms 154 can include any of a wide variety of mechanisms that can be used to provide information to operator 156 and receive interactive inputs from operator 156. Operator interface mechanisms 154 can include audio, visual, and haptic mechanisms, among others. Examples of operator interface mechanisms 154 can include a steering wheel, joysticks, pedals, levers, buttons, microphones and speakers (such as when speech recognition functionality is provided), among other things. Operator interface mechanisms 154 can include display screens, touch sensitive display screens, lights, audible alert mechanisms, etc. When the operator interface mechanisms 154 include a display screen, operator input mechanisms can be provided on the display screen. Such operator input mechanisms can include buttons, links, icons, or other operator actuatable elements that can be actuated using a point and click device, a touch gesture, a voice input, or other interactions. Data stores 151 store a variety of data some of which will be described in more detail herein. Additionally, the data stored in data stores 151 can include computer executable instructions that are executable by one or more components of machine 100 (e.g., one or processors or servers 150, processing modules 158, control system 160 (and components thereof), mapping system 199, etc.) to implement functionalities of such components. It will be understood that data stores 151 can include different forms of data stores, for instance both volatile data stores (e.g., Random Access Memory (RAM)) and non-volatile data stores (e.g., Read Only Memory (ROM), hard drives, solid state drives, etc.).

Communication system 152 can include a bus controller that controls information on one or more bus structures (such as a CAN bus, a plurality of different CAN subnetworks, or another bus) on machine 100. Communication system 152 can include wired networking components such as ethernet components that operate according to a known standard (e.g., IEEE 802.3), and other types of network and communication system components. Communication system 152 can also include other communication systems that allow machine 100 to communicate with remote devices or systems. Communication system 152 can include communication systems that allow machine 100 to communicate over various networks (e.g., networks 606 shown below). Such communication systems can include a cellular communication system, a local area network communication system, a wide area network communication system, a near field communication system, or a wide variety of other communication systems.

Geographic position sensors 163 can be a global navigation satellite system (GNSS) receiver, a dead reckoning system, a cellular triangulation system, or other position sensors. Geographic position sensors 163 illustratively detect and generate sensor data indicative of geographic locations of machine 100. In some examples, the sensor data generated by geographic position sensors 163 can be tracked to derive machine travel speed and machine travel direction. In other examples, machine travel speed and travel direction can be detected by sensors that detect movement of components of machine 100, such as ground engaging traction elements 106. Target identification system 158 illustratively identifies targets, as well as characteristics of targets (e.g., location, phytometric parameter(s), etc.), relative to which material is to be applied by machine 100. For example, when machine 100 is to apply the material relative to (e.g., on, by (e.g., between, before, after, a combination thereof, or otherwise near)) crop plants, then target identification system 158 identifies crop plants, as well as their locations, and phytometric parameter(s) so that material can be applied desirably (at desired locations relative to the crop plants as well as at desired rates (e.g., per the phytometric parameter(s) of the crop plants)). When machine 100 is to apply the material relative to (e.g., on, by (e.g., between, before, after, a combination thereof, or otherwise near)) weeds, then target identification system 158 identifies weeds, as well as their locations, and phytometric parameter(s) so that material can be applied desirably (at desired locations relative to the weeds as well as at desired rates (e.g., per the phytometric parameter(s) of the weeds)). When machine 100 is to apply the material relative to (e.g., on, by (e.g., between, before, after, a combination thereof, or otherwise near)) crop rows, then target identification system 158 identifies crop rows, as well as their locations, and phytometric parameter(s) so that material can be applied desirably (at desired locations relative to the crop rows as well as at desired rates (e.g., per the phytometric parameter(s) of the crop rows)). When machine 100 is to apply the material relative to (e.g., on, by (e.g., between, before, after, a combination thereof, or otherwise near)) crop groupings, then target identification system 158 identifies crop groupings, as well as their locations, and phytometric parameter(s) so that material can be applied desirably (at desired locations relative to the crop groupings as well as at desired rates (e.g., per the phytometric parameter(s) of the crop groupings)). Therefore, each of the sensors 122 captures sensor data (e.g., images) of a region of interest within the field of view corresponding to the sensor 122. The captured sensor data (e.g., images) can be compensated or corrected based on information detected by light sensor 130. Processing modules (e.g., image processing modules) 124 then process the sensor data (e.g., images) captured by sensors 122 to correct them and to identify targets, the locations of targets, and the phytometric parameter(s) of targets, in the sensor data (e.g., images). The sensor data (e.g., images) can then be transformed based on information captured by boom sensors 126, for instance, in the case of images, can be transformed with mapping coefficients that match pixels in the image (e.g., the pixels corresponding to a target) to actual locations on the ground.

Control system 160, for instance, nozzle body controller 170, can identify which nozzle bodies 120 are to be actuated, when they are to be actuated, and how (e.g., duration such as cycle time) to apply the material relative to the targets and at desired application rates based on the sensor data. Control system 160 can then provide control outputs to the various (and corresponding) controllers 192 to control the nozzle bodies 120 accordingly. In one particular example, as previously explained, control system 160 (e.g., nozzle body controller 170) can, based on the sensor data, provide each controller 192 with a respective command that can be used by each controller 192 to adjust pulse width modulation (PWM) parameters (e.g., frequency, duty cycle, etc.). For example, control system 160 (e.g., nozzle body controller 170) can, based on the sensor data, provide each controller 192 with a respective target application rate (TAR) command that is converted by the controller 192 into a pulse width modulation (PWM) command. The PWM command varies the PWM parameters (e.g., duty cycle, etc.) to control the duration for which a corresponding actuator 190 (e.g., valve) is open and closed to vary the application rate of material (corresponding to the TAR command) while maintaining a desired pressure. This allows for consistent droplet size and speed while varying the application rate. For example, control system 160 can generate the TAR commands based on phytometric parameter(s) of targets indicated by the sensor data generated by sensors 122. In this way, the application rate of material can be controllably varied based on the phytometric parameter(s) of targets detected as the machine 100 operates at the worksite. Controlling the material application rate based on the phytometric parameter(s) of targets will be described in more detail below.

In such cases, and as is described in greater detail below, the identifications of target identification system 158 (e.g., identified targets, locations of targets, phytometric parameter(s) of targets, material application information (e.g., location of material application, material application rate, etc.) can be stored (e.g., in data store 151) and/or communicated (e.g., via communication system 152) to other systems (e.g., remote computing systems, such as 602, other agricultural machines, such as 608, as well as various other systems). These identifications may be useful in planning and/or in machine control in subsequent operations at the worksite (or at other worksites) and can be used, for example, in the control of other agricultural machines (e.g., 608). In some examples, mapping system 199 can generate a map of the worksite that maps values indicating the identifications of target identification system 158, for examples, values indicating the locations of targets, values indicating phytometric parameter(s) (e.g., values of phytometric parameters) of targets, values indicating material application locations, and values indicating material application rates. The mapped values can be georeferenced based on, for example, outputs of geographic position sensors 163. The map(s) generated by mapping system 199 can be stored (e.g., in data store 151) and/or communicated (e.g., via communication system 152) to other systems (e.g., remote computing systems, such as 602, other agricultural machines, such as 608, as well as various other systems). The map(s) (or mapped value(s)) may be useful in planning and/or control in subsequent operations at the worksite (or at other worksites) and can be used, for example, in the control of other agricultural machines (e.g., 608).

Pump controller 172 can (e.g., based on the sensor data generated by sensors 122) generate control signals to control pumps 184 that pump the material to be applied through the conduits on boom 118 to the nozzle bodies 120. Boom position controller 174 can (e.g., based on the sensor data generated by sensors 122) generate control signals to control boom position actuators 182 to move the various portions of boom 118 to different desired positions. Steering controller 176 can (e.g., based on the sensor data generated by sensors 122) generate control signals to control steering subsystems 196 to control the heading of agricultural machine 100. Propulsion controller 178 can (e.g., based on the sensor data generated by sensors 122) generate control signals to control propulsion system 198 (which may be an engine that drives ground engaging traction elements 106 through a transmission, individual motors that drive the individual ground engaging traction elements 106, or another power source that drives the propulsion of machine 100) to control the speed and forward/reverse direction of travel of machine 100.

Supplemental light source controller 171 can (e.g., based on sensor data generated by light sensors 130) generate control signals to control (e.g., activate or deactivate) supplemental light sources 131.

Interface controller 175 can control interface mechanisms, such as interface mechanisms 154 (or interface mechanisms 604 as will be described below) to present (e.g., display) information indicative of or based on data collected by or generated by machine 100. Further, as will be detailed below, interface controller 175 can control interface mechanisms to generate interactable interfaces for receiving user or operator inputs.

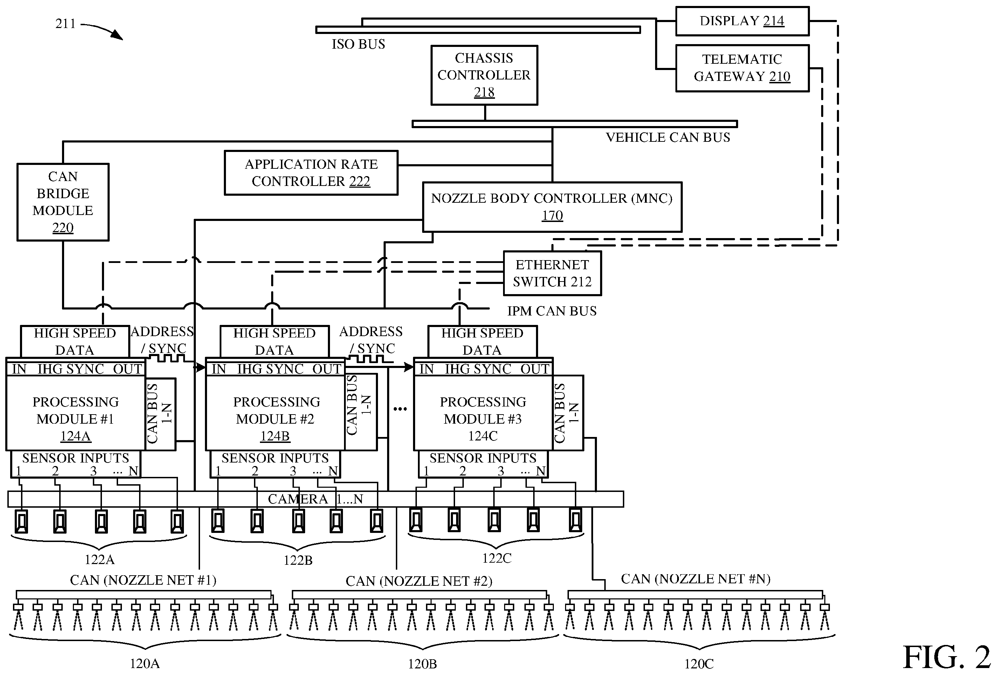

FIG. 2 is a partial pictorial illustration and partial block diagram/schematic diagram of control architecture 211 which includes different portions of agricultural machine 100. Similar items are similarly numbered to those shown in FIGS. 1A - 1D. FIG. 2 shows that each processing module 124 processes sensor data (e.g., images) from a corresponding set of sensors 122 for control of a corresponding set of nozzle bodies 120. For instance, processing module 124A can receive inputs from a plurality of sensors 122A and generate output signals that are used to control the open/close state of actuators (e.g., valves) 190 in a subset of nozzle bodies 120A. Processing module 124B can receive inputs and process sensor data from a different subset of sensors 122B and generate output signals that are used to control the on/off state of actuators (e.g., valves) 190 in a second subset of nozzle bodies 120B. Processing module 124C can receive inputs and process sensor data from yet another subset of sensors 122C and generate output signals to control valves in yet another subset of nozzle bodies 120C. While three processing modules 124, three subsets of sensors 122, and three subsets of nozzle bodies 120 are shown in FIG. 2, it will be noted that more or fewer processing modules 124, subsets of sensors 122, and/or subsets of nozzle bodies 120 can be used. Further, it will be understood that in some examples, each subset of nozzle bodies (e.g., 120A, 120B, 120C, etc.) can correspond to a different boom section of boom 118 and thus, each boom section, having one or more nozzle bodies 120, can be individually controlled.

The information can be transferred from sensors 122 to their corresponding processing modules 124 over a CAN bus. Control signals can be provided to nozzle bodies 120 over a different, or the same, CAN bus. In addition, each subset of sensors 122 and nozzles 120 can have their own CAN subnetwork. Further, as is described in greater detail below, the individual processing modules 124 can communicate with one another so that they each know which sensors 122 and nozzle bodies 120 correspond to which of the various processing modules 124. The processing modules 124 can communicate through a telematic gateway 210 using an ethernet switch 212, with a display mechanism or display controller 214 that can be part of control system 160 and/or operator interface mechanisms 154. Nozzle body controller 170 can communicate with display controller 214 over a separate vehicle CAN bus 216 that may be controlled by a chassis controller 218. Communication system 152 (shown in FIG. 1C) can include CAN bridge module 220 which bridges communication across the various CAN buses and subnetworks on agricultural machine 100.

FIG. 2 also shows that agricultural machine 100 can include an application rate controller 222. As previously discussed, the application rate of material may be varied based on, for example, the phytometric parameter(s) of targets as detected by sensors 122. Application rate controller 222 thus provides an output to nozzle body controller 170 indicating the rate at which material should be applied by each nozzle body 120 or by each subset of nozzle bodies 120. Nozzle body controller 170 can then control the rate of flow of material through the nozzle bodies 120 based upon the application rate received from application rate controller 222. While application rate controller 222 is shown as separate from nozzle body controller 170, it will be understood that in other examples, application rate controller 222 may be a component (or functionality) of nozzle body controller 170 (as will be shown below) or of processing module 124. Additionally, while shown separately in examples herein, it will be understood that functionality or components, or both, can be distributed in other ways. For example, but not by limitation, the functionality and components of nozzle body controller 170, application rate controller 222, and processing modules 124 can be combined in various ways. For instance, each processing module 124 can include functionality or components of nozzle body controller 170 or application rate controller 222, or both, such that, for example, each processing module 124 determines an application rate (e.g., TAR) and generates a corresponding application rate (e.g., TAR) command for each controller 192 of each nozzle body corresponding to the processing module 124.

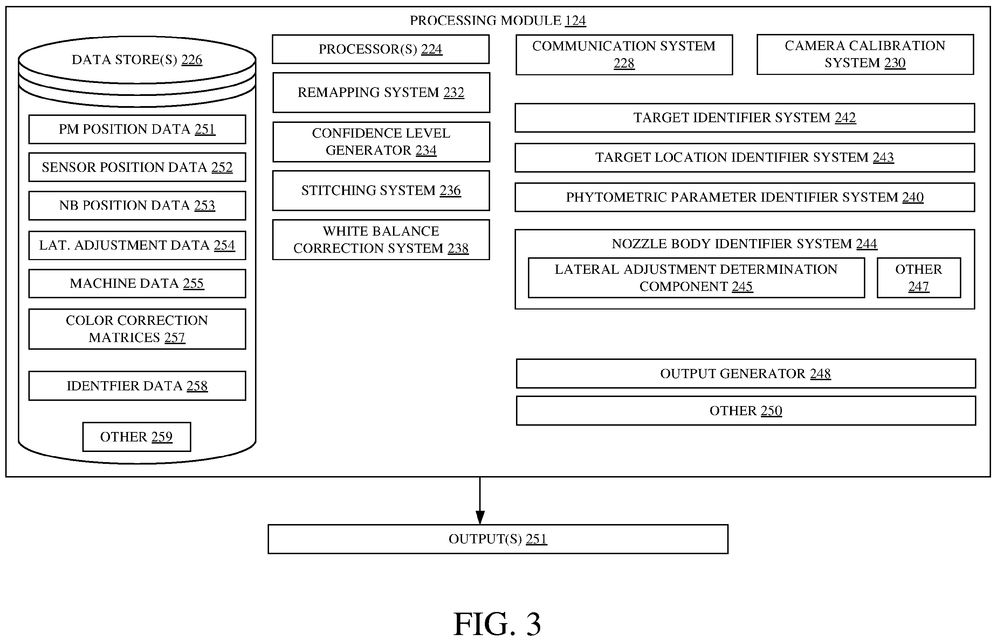

FIG. 3 shows one example of a block diagram of a processing module 124. Each processing module 124 can have its own set of processors 224, one or more data stores 226, and communication system 228. In some examples, each processing module 124 can utilize the processors 150, data stores 151, and communication system 152. Each processing module can further include sensor calibration system 230, remapping system 232, confidence level generator 234, stitching system 236, white balance correction system 238, target identifier system 242, target location identifier system 243, phytometric parameter identifier system 240, nozzle identifier system 244 (which can include lateral adjustment determination component 245 and other items 247), and output generator 248. Processing module 124 can also include other items 250.

Data stores 226 can include processing module (PM) position data 251, sensor position data 252, nozzle body (NB) position data 253, lateral adjustment data 254, machine data 255, color correction matrices 257, identifier data 258, and it can include other items 259. In some examples, the data shown in data stores 226 can additionally, or alternatively, be stored in data stores 151 can be obtained (e.g., retrieved or received) by each processing module 124 therefrom. Data stores 226 can further store computer executable instructions that are executable by one or more components of processing module 124 (e.g., one or processors 224, remapping system 232, confidence level generator 234, stitching system 236, white balance correction system 238, communication system 228, camera calibration system 230, target identifier system 242, target location identifier system 243, phytometric parameter identifier system 240, nozzle body identifier system 244 (and components thereof), output generator 248, etc.) to implement functionalities of such components. It will be understood that data stores 226 can include different forms of data stores, for instance both volatile data stores (e.g., Random Access Memory (RAM)) and non-volatile data stores (e.g., Read Only Memory (ROM), hard drives, solid state drives, etc.).

Sensor calibration system 230 controls agricultural machine 100 to move through a calibration process in which transforms are generated for each sensor 122, at each of a plurality of different positions relative to the ground. Remapping system 232 remaps the regions of interest in sensor data (e.g., in each image), based upon the transforms, during runtime operation of agricultural machine 100. Confidence level generator 234 generates one or more confidence scores and/or quality scores corresponding to the sensor data. The confidence scores and quality scores may be indicative of such things as the presence of obscurants, the ability of the system to accurately apply material based upon the sensor data, whether the sensor data is of sufficient quality (e.g., whether the sensor data is too noisy, whether an image is blurry, etc.), whether the sensor 122 is damaged or blocked, among other things. Stitching system 236 processes the sensor data (e.g., images) from multiple sensors 122 to aggregate them into a single continuous indicator (e.g., into a single continuous image) of the ground in front of one or more of the sections of boom 118. White balance correction system 238 corrects the sensor data (e.g., image) for the location of the sun, the color of the light (e.g., whether the sensor data was captured in a shadow, under the clouds, etc.), the light intensity, among other things.

Target identifier system 242 identifies based, at least, on the sensor data generated by sensors 122, targets (e.g., crop, crop rows, weeds, crop groupings, etc.) at the worksite. Target location identifier system 243 identifies based, at least, on the sensor data generated by sensors 122, the locations of targets (e.g., locations of crops, locations of crop rows, locations of weeds, locations of crop groupings, etc.) at the worksite. It will be understood that target location identifier system 243 can further utilize geographic position sensor data generated by geographic position sensors 163 in identifying locations of targets. The geographic position sensor data can be stored as machine data 255.

Phytometric parameter identifier system 240 identifies based, at least, on the sensor data generated by sensors 122, phytometric parameter(s) (e.g., biomass, width, height, volume, spectral response, etc.) of targets at the worksite. The identified phytometric parameter(s) can each be expressed in a value. In one example, identifying the phytometric parameter(s) can be identifying an area of sensor data (e.g., image(s)) occupied by a target. For example, where the sensor data includes an image, the total area of the image occupied by target(s). The phytometric parameter value can then be expressed as a ratio (e.g., percentage, etc.) of the area of target in the image to the total area of the image. This can be calculated by calculating a ratio of pixels, of an image, having a pixel value (e.g., color value, etc.) corresponding to a target (e.g., a reference pixel value or a reference pixel value range) to the total pixels of the image. For example, pixel values (e.g., color values, etc.) corresponding to targets (e.g., reference pixel values or reference pixel value ranges) can be stored as identifier data 258 and utilized by phytometric parameter identifier system 240 (e.g., for comparison) when analyzing pixel values of sensor data to identify phytometric parameter(s). A simplified example can be green color values v. non-green color values in an image, wherein pixels having a green color value are identified as pixels corresponding to targets. Green v. non-green is merely one example. It will be understood that other colors can be used. Further, in some examples, color ranges may be utilized, for instance, a color value range can be used to identify targets and pixels having a color value in the range are identified as corresponding to a target whereas pixels having a color value outside of the range are identified as corresponding to non-targets.

In other examples, other sensor data values can be used to identify targets and phytometric parameter(s) of targets. For example, spectral response (e.g., reflectivity) values detected by sensors 122 can be utilized. For instance, normalized difference vegetation index (NDVI) values detected by sensors 122 can be utilized to identify targets and phytometric parameter(s) of targets. In such cases, the phytometric parameter (phytometric parameter value) can be expressed as a ratio of the total amount of pixels having a pixel value (e.g., a spectral response value such as an NDVI value or another type of spectral response value) corresponding to a target (e.g., a reference pixel value or a reference pixel value range) to the total pixels of the image. Pixel values (e.g., spectral response values such as NDVI values or other types of spectral response values.) corresponding to targets (e.g., reference pixel values or a reference pixel value ranges) can be stored as identifier data 258 and utilized by identifier system 240 (e.g., for comparison) when analyzing pixel values of sensor data to identify phytometric parameter(s) of targets. In other examples, a width and/or a height of targets can be identified based on sensor data generated by sensors 122 and the width and/or height of a target can be utilized to identify a phytometric parameter of the target. For example, with a 2D image, a width of the targets can be identified (e.g., based on pixel values). The identified width can be utilized with a reference height value or reference height value formula (e.g., stored as identifier data 258) to generate a phytometric parameter value (e.g., an estimated 3D biomass value). For example, crops and/or weeds can have general (and known) ratios between width and height. For example, with cotton plants, it can be assumed that the width is approximately eighty percent (80%) of the height of the cotton plant. Thus, a reference height value formula (mathematical equation) of X/Y = 80%, where X is the identified width of the target and the mathematical equation can be used to solve for Y, where Y is the height of the target. Once the height is identified (using the detected width and the mathematical equation), the height and width can be utilized to generate a phytometric parameter value (e.g., an estimated 3D biomass value). For instance, the height and width can be utilized to calculate a volume of the target and the volume can be utilized to calculate a biomass of the target (e.g., utilizing a reference density value stored as identifier data 258). Of course, in some examples, the identifier data 258 can include a lookup table or some other conversion that converts identified values to desired output values (e.g., phytometric parameter values). For instance, a lookup table or other conversion can be used to convert input values (e.g., width or height, width and height, etc.) detected in sensor data to output phytometric parameter values (e.g., estimated biomass values). Where radar, ultrasound, or lidar are used, the radar, ultrasound, or lidar sensor(s) record reflections to survey the worksite and to generate an image or model (e.g., 3D or 2D) of the worksite (and objects, including targets, therein). Targets in the radar, ultrasound, or lidar generated data can be distinguished from other objects based on values (e.g., dimensional values, etc.) of the generated data or machine learning algorithms (as provided by identifier data 258). Dimensional information, such as the width, height, or volume, of targets can be calculated from radar, ultrasound, or lidar generated data and can be used to set an application rate or can be converted to a desired phytometric parameter value (e.g., an estimated biomass value) in similar ways as described above.

Further, as previously discussed, sensors 122 can include a variety of sensors, including a variety of cameras. In one example, a sensor 122 can comprise a stereo camera, the images generated thereby, along with camera parameters (e.g., focal length, baseline) and processing (e.g., disparity calculation, triangulation), can be used to determine phytometric parameter values of a target in the image, such as height values. In another example, sensors 122 can comprises mono cameras. For instance, images generated by neighboring mono cameras, along with camera parameters (e.g., baseline, focal length) and processing (e.g., disparity calculation, triangulation), can be used to determine phytometric parameter values of a target in the image, such as height values.

In some examples, phytometric parameter identifier system 240 identifies phytometric parameter(s) (e.g., biomass, width, height, volume, spectral response, etc.) of targets at the worksite based on sensor data (e.g., images) generated by sensors 122 and a machine learning model. For instance, phytometric parameter identifier system 240 can utilize a machine learning model such as neural network (e.g., convolutional neural network) wherein the sensor data (or values thereof) generated by sensors 122 are provided as input to generate an output indicating phytometric parameter(s) (or phytometric parameter value(s)) of targets detected by the sensors 122. For example, such a machine learning model is trained on input training data sets (e.g., sensor data, such as images) having known and corresponding outputs (e.g., phytometric parameter value(s)) and the model iteratively ingests and processes the input training data to generate an output, and is corrected (reinforced) with the known or assigned outputs, adjusting model parameters (e.g., weights and biases), until a desired accuracy or until convergence. One example machine learning model is a neural network (e.g., convolutional neural network) that is pre-trained to receive, as input, sensor data (e.g., generated by sensors 122) and to generate an output, such as one or more phyotmetric parameter value(s). In one example, such a model is trained on input training data sets (e.g., sensor data such as images) having known and corresponding outputs (e.g., phytometric parameter value(s)) and the model iteratively ingests and processes the input training data to generate an output, and is corrected (reinforced) with the known or assigned outputs, adjusting model parameters (e.g., weights and biases), until a desired accuracy or until convergence.

Nozzle body identifier system 244 identifies which one or more nozzle bodies 120 need to be activated to desirably apply material relative to the targets. For example, nozzle body identifier system 244 can identify which one or more nozzle bodies 120 need to be activated to desirably apply material relative to the targets based, at least on the identified locations of targets and the locations of the nozzle bodies 120 as derived from geographic position sensor data generated by geographic position sensors 163 (e.g., stored as machine data 255) and nozzle body position data 253 (e.g., describing a location of each nozzle body 120 on the machine 100 such as, relative to the geographic position sensors 163). Further, as shown, nozzle body identifier system 244 includes lateral adjustment determination system 245 which can determine if a lateral adjustment is to be made based on, for instance, weather (e.g., wind (direction and speed)), characteristics of the material being applied, boom position, characteristics of the nozzle bodies 120 (e.g., dispersal characteristics such as dispersal area (e.g., spray pattern, etc.), dispersal velocity, etc.), as well as other characteristics. These characteristics (collectively referred to as lateral adjustment characteristics) can be stored in lateral adjustment data 254 and obtained by lateral adjustment determination system 245 therefrom. The lateral adjustment data 254 may be derived from a combination of sensors on the machine 100, operator or user inputs, material provider/manufacturer information, third-party sources, as well as various other sources. As an illustrative example, it may be that in a first set of conditions, nozzle body identifier system 244 would identify a first set of one or more nozzle bodies 120 would need to be activated to desirably apply material relative to a given one or more targets. However, in a second set of conditions (different than the first set of conditions, for instance one or more of different weather, different boom position, different material characteristics, different characteristics of the nozzle, etc.) lateral adjustment determination system 245 may determine that a second set of one or more nozzle bodies 120 (laterally shifted along the boom from the first set of one or more nozzle bodies 120) need to be activated to desirably apply material relative to the given one or more targets and thus, based on this determination, nozzle body identifier system 244 would, in the second set of conditions, identify the second set of one or more nozzle bodies 120.

Output generator 248 generates outputs 251 indicating identifications of processing module 124. For example, the outputs 251 can indicate identified targets (e.g., crops, weeds, crop rows, crop groupings, etc.), the locations of targets, phytometric parameter(s) (e.g., biomass, width, height, volume, spectral response, etc.) of targets at the worksite as machine 100 operates at the worksite. Further, the outputs 251 can indicate calibration transforms generated by calibration system 230, remappings generated by remapping system 232, confidence scores and/or quality scores generated by confidence level generator 234, stitchings generated by stitching system 236, while balance corrections generated by white balance correction system 238, and nozzle body identifications by nozzle body identifier system 244. Some of the items in processing module 124 will now be described in greater detail.

As described previously, color correction matrices 257 can be generated for each sensor 122 and loaded into processing logic (either on processing module 124 or on the image sensor 122) so the images can be corrected for distortion, color, lens shading, distortion, etc. Also, as agricultural machine 100 moves through the worksite, the position of boom 118 may change. Operator 156 or control system 260 may provide commands to control boom actuators 182 to raise or lower the various sections of boom 118. In another example, the agricultural machine 100 may hit a bump or a rut or other terrain that causes movement of boom 118. Also, a dip or gully or bump under the boom 118 may result in a change in the distance between the boom 118 and the ground. A change in the distance between boom 118 and the ground can change the orientation and perspective of the sensors 122 relative to the ground and thus change the location of the sensor data (e.g., images) sensed by sensors 122 relative to the nozzle bodies 120. In order to accommodate this, processing modules 124 include camera calibration system 230 that conducts a calibration process during which transforms are generated for each of the sensors 122 at different boom positions. The transforms ensure that the ROI, within the field of view of each sensor, corresponds to a known location on the ground, relative to the sensors 122 and nozzle bodies 120 (e.g., the ROI corresponds to an area on the ground 2m ahead of the boom and 1m x 1m in area). The calibration process, entails calibration controller 168 (shown in FIG. 1C) controlling boom position actuators 182 to move the boom 118 to different positions. At each position, sensors 122 are calibrated so that the desired transform is generated for that boom position. The calibration controller 168 can then control the boom position actuators 182 to move the boom 118 to another position where the calibration transforms are generated for the sensors 122 at that boom position. Then, during runtime operation, the boom 118 position is sensed (by boom position sensors 126) and the calibration transforms for that boom position are retrieved for each sensor 122 and used in the image processing.

Confidence level generator 234 can generate one or more confidence level metrics (scores) or quality level metrics (scores) indicative of the quality of the sensor data (e.g., images) being analyzed and/or the confidence that the system has in being able to identify targets (and characteristics, such as locations and phytometric parameters, thereof) in that sensor data and to apply material desirably relative to the targets. For instance, it may be that a number of obscurants (such as dust, smoke, etc.) are detected in the air. This may reduce the quality level corresponding to the sensor data or the confidence with which the system can identify and apply material to target in the sensor data. In another example, it may be that the sensor 122 is malfunctioning, or is blocked by mud, or other debris. This may also reduce the quality of the sensor data or the confidence with which the system can identify and apply material to targets in the sensor data. In addition, agricultural machine 100 may be traveling over an area of the worksite that has a high density of weeds, which can be problematic when the operation is to apply material to crop plants, crop rows, or crop groupings. In such an area, it can be difficult to distinguish between the crops and the weeds, as the entire field of view of the sensor 122 may be densely populated with vegetation. Further, it may be that the sensor 122 is moving very quickly, such as when the agricultural machine 100 is turning and the sensor 122 is an outboard sensor on boom 118 which is traveling very quickly during the turn. When the sensor 122 is traveling very quickly, it can be more difficult to identify targets and activate the corresponding nozzle bodies 120 (corresponding to the ROI of the sensor 122) to disperse material quickly enough such that the material can be applied desirably relative to the target (because the sensor is moving so quickly over the ground). The location, heading, and speed of the machine 100 can be stored as machine data 255 and, as explained previously, can be derived from sensors, including, but not limited to, geographic position sensors 163. The speed or velocity of a nozzle body 120 or sensor 122 can be derived based on machine data 255 as well as sensor position data 252 and nozzle body position data 253. All of these and other factors may bear on the quality of the image being processed and the confidence with which the system can identify and apply material desirably relative to targets. As will be discussed further below, the confidence and/or quality levels generated by confidence level generator 234 may be used to determine operating parameters of the machine including, but not limited to, the application rate (e.g., TAR).

As discussed, target identifier system 242 is operable to identify based, at least, on the sensor data generated by sensors 122, targets (e.g., crops, crop rows, crop groupings, weeds, etc.) at the worksite. Target identifier system 242 can identify targets based on sensor data values in the sensor data, for instance, pixel values (e.g., color values, etc.), spectral response values (e.g., NDVI values, or other types of spectral response values), as well as other types of sensor data values, such as distance values or point cloud values generated based on ultrasonic or lidar scanning. Identifier data 258 (e.g., reference sensor data values such as reference pixel values, for instance, reference color values or reference pixel values, or reference dimensional values, distance values, or point cloud values, as well as various other reference sensor data values) can be utilized (e.g., for comparison) by target identifier system 242 to identify targets based on the sensor data. For example, pixels having a color value corresponding to a target (e.g., as defined by identifier data 258) can be identified to identify targets in the sensor data. In another example, pixels having a spectral response value (e.g., NDVI value, etc.) corresponding to a target (e.g., as defined by identifier data 258) can be identified to identify targets in the sensor data. In other examples, target identifier system 242 can utilize a machine learning model such as neural network (e.g., convolutional neural network) wherein the sensor data (or values thereof) are provided as input to generate an output indicating whether or not targets are indicated by the sensor and, in some examples, what type of targets are indicated by the sensor data. For example, such a machine learning model is trained on input training data sets (e.g., sensor data, such as images) having known and corresponding outputs (e.g., target values indicating whether targets are indicated by the data) and the model iteratively ingests and processes the input training data to generate an output, and is corrected (reinforced) with the known or assigned outputs, adjusting model parameters (e.g., weights and biases), until a desired accuracy or until convergence. One example machine learning model is a neural network (e.g., convolutional neural network) that is pre-trained to receive, as input, sensor data (e.g., generated by sensors 122) and to generate an output, such as one or more target values (indicating whether or not targets are indicated by the sensor data). In one example, such a model is trained on input training data sets (e.g., sensor data such as images) having known and corresponding outputs (e.g., target values indicating whether or not targets are indicated by the data) and the model iteratively ingests and processes the input training data to generate an output, and is corrected (reinforced) with the known or assigned outputs, adjusting model parameters (e.g., weights and biases), until a desired accuracy or until convergence.

As discussed, target location identifier system 243 is operable to identify based, at least, on the sensor data generated by sensors 122, locations of targets (e.g., locations of crops, locations of crop rows, locations of crop groupings, locations of weeds, etc.) at the worksite. Target location identifier system 243 is operable to identify locations of targets at the worksite based, at least, on the sensor data the locations of the sensors 122 as derived from geographic position sensor data generated by geographic position sensors 163 and sensor position data 252 (e.g., describing a location of each sensor 122 on the machine 100 (e.g., relative to the geographic position sensors 163)). Further, the ROI of each sensor may be known, as described above, and can be utilized by target location identifier system 243 in identifying locations of targets.

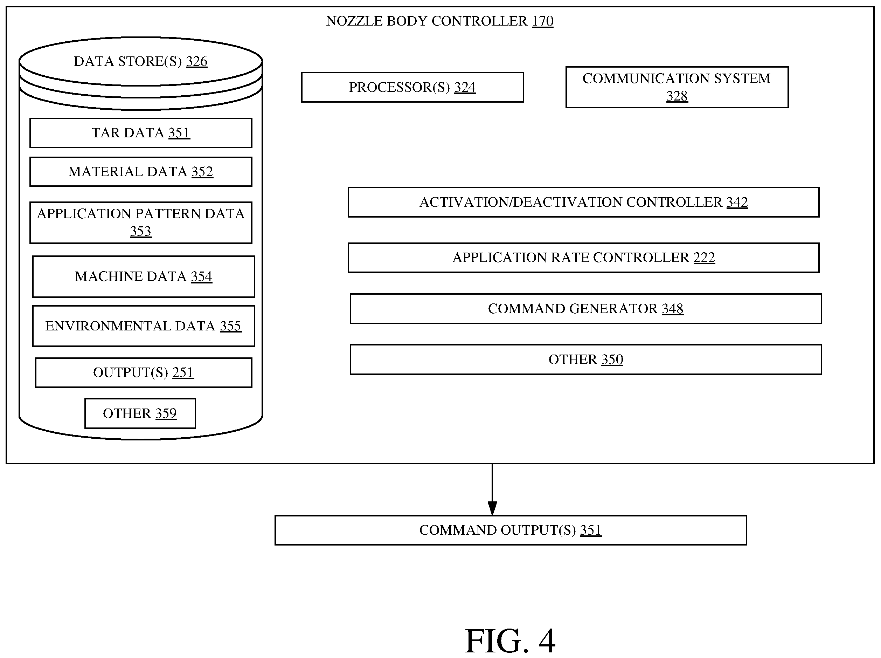

FIG 4. shows one example of a block diagram of a nozzle body controller 170. Nozzle body controller 170 can have its own set of processors 324, one or more data stores 326, and communication system 328. In some examples, nozzle body controller 170 can utilize the processors 150, data stores 151, and communication system 152. Nozzle body controller 170 can further include activation/deactivation controller 342, application rate controller 222, and command generator 348. Nozzle body controller 170 can also include other items 350. As previously shown in FIG. 2, application rate controller 222 can, in some examples, be separate from nozzle body controller 170. However, as previously described and as shown in the example in FIG. 4, application rate controller 222 can be a component of nozzle body controller 170 or processing module 124. Additionally, and as previously explained, while shown separately in examples herein, it will be understood that functionality or components, or both, can be distributed in other ways. For example, but not by limitation, the functionality and components of nozzle body controller 170, application rate controller 222, and processing modules 124 can be combined in various ways. For instance, each processing module 124 can include functionality or components of nozzle body controller 170 or application rate controller 222, or both, such that, for example, each processing module 124 determines an application rate (e.g., TAR) and generates a corresponding application rate (e.g., TAR) command for each controller 192 of each nozzle body corresponding to the processing module 124.

Data stores 326 can include target application rate (TAR) data 351, material data 352, application pattern data 353, machine data 354, environmental data 355, outputs 251. and it can include other items 259. In some examples, the data shown in data stores 326 can additionally, or alternatively, be stored in data stores 151 can be obtained (e.g., retrieved or received) by nozzle body controller 170 therefrom. Data stores 326 can further store computer executable instructions that are executable by one or more components of nozzle body controller 170 (e.g., one or processors 324, communication system 328, activation/deactivation controller 342, application rate controller 222, command generator 348, etc.) to implement functionalities of such components. It will be understood that data stores 326 can include different forms of data stores, for instance both volatile data stores (e.g., Random Access Memory (RAM)) and non-volatile data stores (e.g., Read Only Memory (ROM), hard drives, solid state drives, etc.).

Activation/deactivation controller 342 determines when to activate and when to deactivate one or more nozzle bodies 120 to desirably apply material relative to targets based on one or more items of data. Application rate controller 222 determines an application rate (e.g., target application rate) for each of one or more nozzle bodies 120 based on one or more items of data. Command generator 348 generates command outputs 351 to each of one or more controllers 192 which instruct or can otherwise be used by each of the one or more controllers 192 to control the corresponding nozzle body 120 (e.g., to activate, to deactivate, to apply material at the target application rate, etc.). Activation/deactivation controller 342 determines when to activate and when to deactivate one more nozzle bodies 120, for instance, the nozzle bodies 120 identified by nozzle body identifier system 244 (as indicated by outputs 251) to desirably apply material relative to corresponding target(s). The activation and deactivation timing identified by activation/deactivation controller 342 can be further based on the desired application pattern (as indicated by application pattern data 353). Some examples of application patterns are shown in FIG. 1A (e.g., treatment areas 128, 129, and 133). The application patterns can be, for example, to apply material before a target (e.g., 133), after a target (e.g., 133), between targets (e.g., 133), to a target (e.g., 129), or a combination thereof (e.g., 128). Application pattern data 353 (and thus desired application patterns) can be provided by operator or user input, provided by material producers/manufactures, defined according to target information (e.g., a lookup table that defines application pattern based on a type of target), as well as in other ways. The activation and deactivation timing identified by activation/deactivation controller 342 can further be based on characteristics of the material being applied, such as viscosity, as indicated by material data 352. The activation and deactivation timing identified by activation/deactivation controller 342 can further be based on the location of targets as indicated by outputs 251. Material data 352 be derived from a combination of sensors on the machine 100, operator or user inputs, material provider/manufacturer information, third-party sources, as well as various other sources. The activation and deactivation timing identified by activation/deactivation controller 342 can further be based on environmental data 355 such as weather conditions, for instance, wind (e.g., wind direction and speed), as indicated by environmental data 355. Environmental data 355 can be provided in various ways, for example, environmental data 355 may be derived from a combination of sensors on the machine 100, operator or user inputs, third-party sources, as well as various other sources. The activation and deactivation timing identified by activation/deactivation controller 342 can further be based on the location of the identified nozzle bodies 120, the speed and heading of the machine 100, the speed and heading of the identified nozzles bodies 120, as well as various other machine characteristics as indicated by machine data 354. Machine data 354 can be provided in various way, for example, machine data 354 may derived from sensors on the machine 100, operator or user inputs, third-party sources, as well as various other sources. Activation/deactivation controller 342 then determines activation and deactivation timings for each of one or more nozzle bodies 120 (when to activate and when to deactivate one more nozzle bodies 120), for instance, the nozzle bodies identified by nozzle body identifier system 244 (as indicated by outputs 251) to desirably apply material relative to corresponding target(s) (e.g., to apply material relative to corresponding targets in accordance with desired application patterns).

It will be understood that where the nozzle bodies 120 (e.g. actuators 190) are controlled using PWM, the activation and deactivation timing identified by controller 342 refers to the beginning and end of an application window, wherein the application window can constitute one or more periods (one or more on/off cycles). Thus, activation timing can indicate when to begin an application window (when to initially activate a nozzle body 120) and the deactivation timing can indicated when to end an application window, while, during the application window, the nozzle body 120 may be periodically turned on and off (according to the PWM parameters (e.g., duty cycle)) a plurality of times to control the application rate.

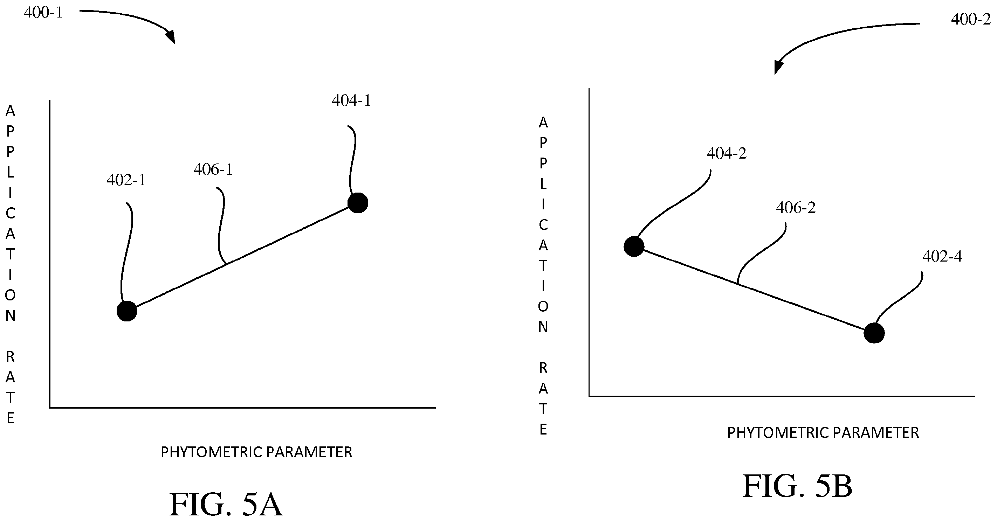

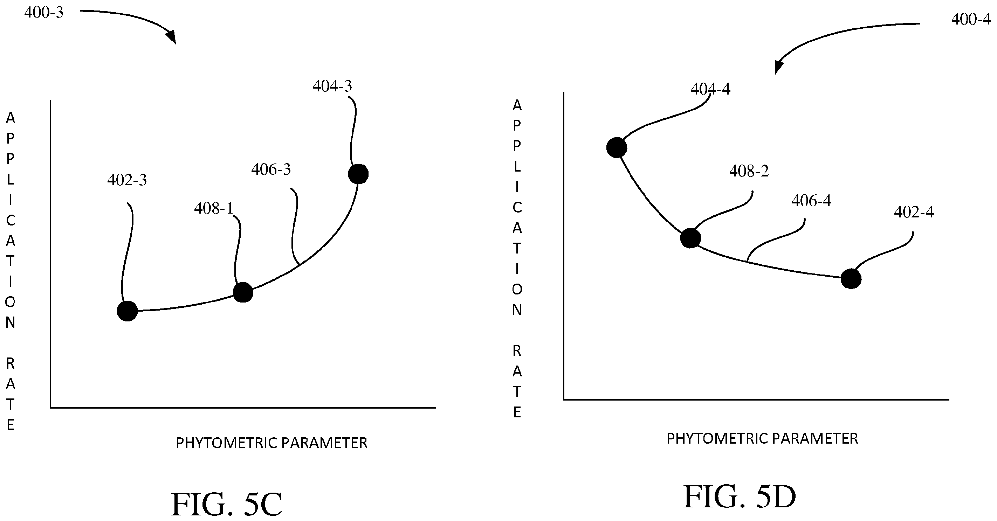

Application rate controller 222 determines an application rate (e.g., TAR) for each of one more nozzle bodies 120, for instance, for each of the nozzle bodies 120 identified by nozzle body identifier system 244 (as indicated by outputs 251) to desirably apply material relative to corresponding target(s), that is, to apply material in an amount or at a rate relative to the targets as desired. The application rate (e.g., TAR) identified by application rate controller 222 can be based on outputs 251, for example, but not by limitation, phytometric parameter(s) (e.g., biomass, width, height, volume, spectral response, etc.) of identified targets. In this way, the material application rate can be varied according to the detected phytometric parameter(s) of targets at the worksite. Further, the application rate identified by application rate controller 222 can be based on target application rate (TAR) data 351, which can comprise a form of conversion or correspondence between phytometric parameter(s) (values of phytometric parameter(s)) and target application rates. For example, the TAR data 351 can include a lookup table or other conversion that converts input phytometric parameter(s) (or values of phytometric parameter(s)) to output application rates. In one example, the TAR data 351 can be provided by an operator or user, for instance, through an interface mechanism (one example of which will be shown in more detail below). For example, an operator or user can define application rates and corresponding phytometric parameter(s) (or values of phytometric parameter(s)), for instance, each phytometric parameter value (or value range) has a corresponding application rate. For instance, an operator or user can define a minimum application rate and a corresponding phytometric parameter value (or value range) and a maximum application rate and a corresponding phytometric parameter value (or value range). Examples of this are shown in FIGS. 5A, 5B, and 5C.

FIG. 5A is a pictorial illustration showing one example of an application rate function 400-1 defined by an operator or user. Application rate function 400-1 is one example of TAR data 351 useable by application rate controller 222 to determine application rates (e.g., TARs). As can be seen, the operator or user has defined a minimum 402-1 corresponding to an application rate on the Y axis and corresponding to a phytometric parameter (e.g., biomass, height, width, volume, spectral response, etc.), or phytometric parameter value, on the X axis. As can further be seen, the operator or user has defined a maximum 404-1 corresponding to an application rate on the Y axis and corresponding to a phytometric parameter (e.g., biomass, height, width, volume, spectral response, etc.), or phytometric parameter value, on the X axis. The minimum 402-1 and maximum 404-1 define a function (e.g., line) 406-1 useable by controller 222 to convert input phytometric parameter(s) (or input values of phytometric parameter(s)) to output application rates (TARs). As a simplified example, suppose an input phytometric parameter (or phytometric parameter value) is halfway between the phytometric parameter (or phytometric parameter value) corresponding to the minimum 402-1 and the phytometric parameter (or phytometric parameter value) corresponding to the maximum 404-1, in such as case, the output application rate may simply be the average of the application rate corresponding to the minimum 402-1 and the application rate corresponding to the maximum 404-1.

While the example shown in FIG. 5A shows that as the phytometric parameter (or phytometric parameter value) increases the application rate increases. This is because, in some examples (e.g., depending on the target, the material being applied, etc.), the higher the phytometric parameter, or phytometric parameter value, (e.g., the more target) the more material need be applied. However, this need not be the case. In other examples, the relationship between phytometric parameter (or phytometric parameter values) and application rate may be inverse. For example, depending on the material being applied or the target, or other variables, the higher the phytometric parameter, or phytometric parameter value, (e.g., the more target) the less material need be applied. An example relationship, inverse to the relationship shown in FIG. 5A, is shown in FIG. 5B.

FIG. 5B is a pictorial illustration showing one example of an application rate function 400-2 defined by an operator or user. Application rate function 400-2 is one example of TAR data 351 useable by application rate controller 222 to determine application rates (e.g., TARs). As can be seen, the operator or user has defined a minimum 402-2 corresponding to an application rate on the Y axis and corresponding to a phytometric parameter (e.g., biomass, height, width, volume, spectral response, etc.), or phytometric parameter value, on the X axis. As can further be seen, the operator or user has defined a maximum 404-2 corresponding to an application rate on the Y axis and corresponding to a phytometric parameter (e.g., biomass, height, width, volume, spectral response, etc.), or phytometric parameter value, on the X axis. The minimum 402-2 and maximum 404-2 define a function (e.g., line) 406-2 useable by controller 222 to convert input phytometric parameter(s) (or input values of phytometric parameter(s)) to output application rates (TARs). As a simplified example, suppose an input phytometric parameter (or phytometric parameter value) is halfway between the phytometric parameter (or phytometric parameter value) corresponding to the minimum 402-2 and the phytometric parameter (or phytometric parameter value) corresponding to the maximum 404-2, in such as case, the output application rate may simply be the average of the application rate corresponding to the minimum 402-2 and the application rate corresponding to the maximum 404-2. As can be seen in FIG. 5B, in some examples, as the phytometric parameter (or value of the phytometric parameter) decreases, application rate increases.

Further, while the examples shown in FIGS. 5A and 5B show an operator or user defined minimum and maximum, in other examples, an operator or user may define more points, such as more points between a minimum and maximum, and those points can be used to define a function (or line). Examples of this are shown in FIGS. 5C and 5D.

FIG. 5C is a pictorial illustration showing one example of an application rate function 400-3 defined by an operator or user. Application rate function 400-3 is one example of TAR data 351 useable by application rate controller 222 to determine application rates (e.g., TARs). As can be seen, the operator or user has defined a minimum 402-3 corresponding to an application rate on the Y axis and corresponding to a phytometric parameter (e.g., biomass, height, width, volume, spectral response, etc.), or phytometric parameter value, on the X axis. As can further be seen, the operator or user has defined a maximum 404-3 corresponding to an application rate on the Y axis and corresponding to a phytometric parameter (e.g., biomass, height, width, volume, spectral response, etc.), or phytometric parameter value, on the X axis. As can further be seen, the operator or user has defined an intermediary 408-1 corresponding to an application rate on the Y axis and corresponding to a phytometric parameter (e.g., biomass, height, width, volume, spectral response, etc.), or phytometric parameter value, on the X axis. The minimum 402-3, the intermediary 408-1, and maximum 404-3 define a function (e.g., line) 406-3 useable by controller 222 to convert input phytometric parameter(s) (or input values of phytometric parameter(s)) to output application rates (TARs). While the relationship shown in FIG. 5C shows that as the phytometric parameter (or phytometric parameter value) increases so too does the application rate, this need not be the case. Instead, the relationship between phytometric parameter (or phytometric parameter value) and application rate may be inverse, as will be shown in FIG. 5D.

FIG. 5D pictorial illustration showing one example of an application rate function 400-4 defined by an operator or user. Application rate function 400-4 is one example of TAR data 351 useable by application rate controller 222 to determine application rates (e.g., TARs). As can be seen, the operator or user has defined a minimum 402-4 corresponding to an application rate on the Y axis and corresponding to a phytometric parameter (e.g., biomass, height, width, volume, spectral response, etc.), or phytometric parameter value, on the X axis. As can further be seen, the operator or user has defined a maximum 404-4 corresponding to an application rate on the Y axis and corresponding to a phytometric parameter (e.g., biomass, height, width, volume, spectral response, etc.), or phytometric parameter value, on the X axis. As can further be seen, the operator or user has defined an intermediary 408-2 corresponding to an application rate on the Y axis and corresponding to a phytometric parameter (e.g., biomass, height, width, volume, spectral response, etc.), or phytometric parameter value, on the X axis. The minimum 402-4, the intermediary 408-2, and maximum 404-4 define a function (e.g., line) 406-4 useable by controller 222 to convert input phytometric parameter(s) (or input values of phytometric parameter(s)) to output application rates (TARs).

While the examples shown in FIGS. 5C and 5D each show only a single intermediary, it will be understood that in other examples a user or operator can define a plurality of intermediaries, for instance a plurality of different intermediaries each with a different corresponding application rate and phytometric parameter (or phytometric parameter value) between the application rate and phytometric parameter corresponding minimum and the application rate and phytometric parameter corresponding to the maximum.

In examples in which the input (detected) phytometric parameter (or phytometric parameter value) does not satisfy (e.g., less than in FIGS. 5A or 5C or more than in FIGS. 5B or 5C ) than the phytometric parameter (or phytometric parameter value) corresponding to the minimum, controller 222 can select as the output application rate either the minimum application rate (the application rate corresponding to the minimum), no application rate (e.g., identifying that the nozzle bodies are not to disperse material), a fixed application rate (e.g., different than the minimum application rate and defined by operator or user), or a scaled application rate (e.g., an application rate scaled from the minimum application rate, which may be scaled based on the difference between the input phytometric parameter (or phytometric parameter value) and the phytometric parameter (or phytometric parameter value) corresponding to the minimum). Similarly, in examples in which the input (detected) phytometric parameter (or phytometric parameter value) does not satisfy (e.g., more than in FIGS. 5A or 5C or less than in FIGS. 5B or 5D) the phytometric parameter (or phytometric parameter value) corresponding to the maximum, controller 222 can select as the output application rate the maximum application rate (the application rate corresponding to the maximum), no application rate (e.g., identifying that the nozzle bodies are not to disperse material), a fixed application rate (e.g., different than the maximum application rate and defined by operator or user), or a scaled application rate (e.g., an application rate scaled from the maximum application rate, which may be scaled based on the difference between the input phytometric parameter (or phytometric parameter value) and the phytometric parameter (or phytometric parameter value) corresponding to the maximum). In some examples, it may be that the operator or user defines a different way to handle input phytometric parameters (or phytometric parameter values) below the phytometric parameter (or phytometric parameter value) corresponding to the minimum as compared to the way used for handling input phytometric parameters (or phytometric parameter values) above the phytometric parameter (or phytometric parameter value) corresponding to the maximum. For instance, an operator or user may define that, for input phytometric parameters (or phytometric parameter values) below the phytometric parameter (or phytometric parameter value) corresponding to the minimum, the application rate is to be the minimum application rate, a fixed application rate, or a scaled application rate whereas for input phytometric parameters (or phytometric parameter values) above the phytometric parameter (or phytometric parameter value) corresponding to the maximum, the application rate is to be no application rate. This is just one example. In other examples, how input phytometric parameters (or phytometric parameter values) above the phytometric parameter (or phytometric parameter value) corresponding to maximum and below the phytometric parameter (or phytometric parameter value) corresponding minimum may be defined, by the operator or user, to be handled in the same way (e.g., use the maximum/minimum application rate, used a fixed application rate, use a scaled application rate, use no application rate). How controller 222 handles input phytometric parameters (or phytometric parameter values) that do not satisfy (e.g., less than or more than) the phytometric parameter (or phytometric parameter value) corresponding to the minimum or that do not satisfy (e.g., less than or more than) the phytometric parameter (or phytometric parameter value) corresponding to the maximum may be configured by the operator or user (e.g., via input through an input mechanism). For example, an operator or user may configure the controller 222 to use the minimum or maximum application rates, no application rate, a fixed application rate, or a scaled application rate.

Based, at least, on the outputs 251 (e.g., phytometric parameters (or phytometric parameter values)) and the TAR data 351, application rate controller 222 identifies application rates (TARs) for each of one or more nozzle bodies 120. Application rate controller 222 can further identify application rates based on machine data 354 (e.g., machine travel speed, nozzle body travel speed, machine/nozzle body heading, etc.) as well as material data 352 (e.g., material viscosity, etc.). Further, in some examples, application rate controller 222 can identify application rates (TARs) based on confidence or quality scores identified by confidence level generator 234. For example, where a confidence or quality score does not satisfy a threshold (e.g., is below a confidence or quality threshold - which can be provided by an operator or user or in other ways), application rate controller 222 can be configured to identify a preselected or other default application rate (which may be provided by an operator or user or in other ways). For example, when confidence score or quality score is low (relative to a corresponding threshold), the corresponding nozzle bodies 120 can be commanded to dispense at a given application rate, such as, but not limited to, the maximum application rate (e.g., 404-1, 404-2, 404-3, or 404-4) provided by an operator or user, a default application rate provided by an operator or user or provided in other ways, or another application rate.

The application rates identified by application rate controller 222 can be provided to other components of machine 100 for control, for example, an application rate (e.g., TAR) can be communicated to a controller 192 to control a nozzle body 120 (e.g., control an actuator 190) such that the nozzle body 120 dispenses material at the application rate. Additionally, or alternatively, the application rate (e.g., TAR) can be communicated to pump controller 172 to control one or more pumps 184 to pump material from one or more tanks 110 according to the application rate. In some examples, as previously discussed, an application rate (e.g., TAR) provided (e.g., as a command output 351 such as a TAR command) to a controller 192 and can be converted by the controller 192 into a PWM command. The PWM command can be used to vary the PWM parameters (e.g., period, duty cycle, frequency, etc.) of a corresponding actuator 190 (e.g., PWM valve) to apply material at the commanded application rate. In some examples, the application rate (e.g., TAR) provided to pump controller 172 can be used to vary the flow of different materials from each of a plurality of tanks 110 to correspondingly vary the application rate (e.g., change the concentration of a component of the applied material). For instance, more or less water may be mixed with a chemical product to change the concentration of the chemical product in the applied material (mixture of water and chemical product) and thereby change the application rate of the chemical product.

Command generator 348 generates command outputs (e.g., commands) 351 indicating identifications of nozzle body controller 170. For example, the command outputs 351 can indicate identified activation and deactivation timings identified by activation/deactivation controller 342 as well as application rates identified by application rate controller 222. The command outputs 351 can be provided to other items of machine 100 (e.g., controllers 192 and/or pump controller 172, etc.) to control the machine 100 to apply material according to the commands (e.g. at the desired (commanded) times and rates).

Processing module 124, nozzle body controller 170, and application rate controller 222 continuously perform their operations throughout the course of a material application operation performed by machine 100 to, in real time (or near real time) identify targets, target locations, phytometric parameter(s) and to vary the application of material accordingly. Thus, for example, machine 100 can operate to adjust the application rate of material in real time (or near real time) to account for changes in detected phytometric parameter(s).

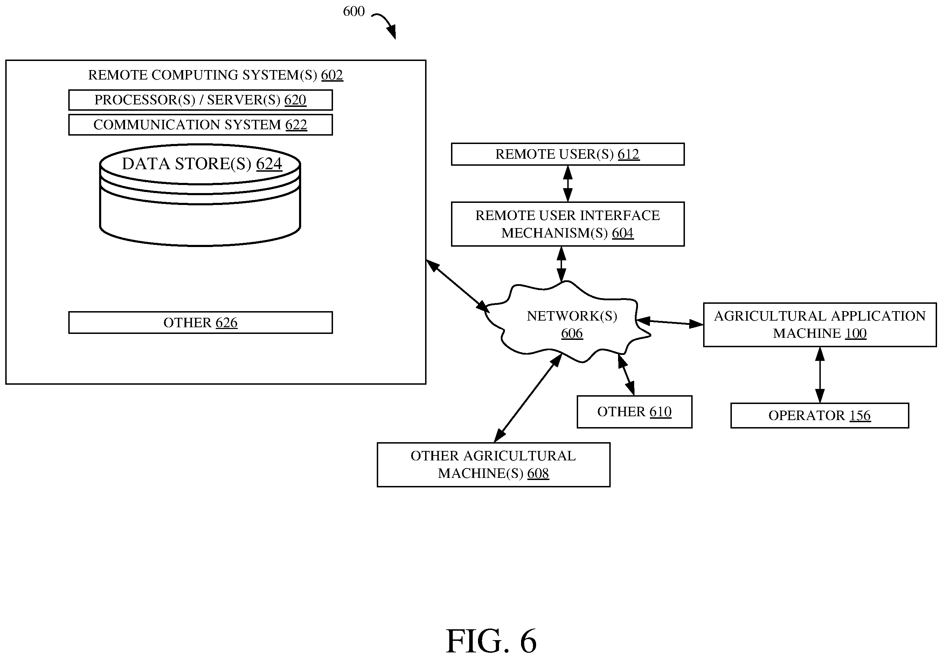

FIG. 6 shows one example of an agricultural application system 600 (also referred to herein as system 600). Agricultural application system 600 includes agricultural application machine 100, remote computing systems 602, remote user interface mechanisms 604, networks 606, other agricultural machines 608, and can include other items 610 as well. Remote computing systems 602, themselves, can include one or more processors or servers 620, communication system 622, one or more data stores 624, and can include other items and functionality 626, as well.

User interface mechanisms 604 can include any of a wide variety of mechanisms that can be used to provide information to a remote user 612 and receive interactive inputs from remote user 612. User interface mechanisms 604 can include audio, visual, and haptic mechanisms, among others. Examples of user interface mechanisms 604 can include a steering wheel, joysticks, pedals, levers, buttons, microphones and speakers (such as when speech recognition functionality is provided), among other things. User interface mechanisms 604 can include display screens, touch sensitive display screens, lights, audible alert mechanisms, etc. When the user interface mechanisms 604 include a display screen, user input mechanisms can be provided on the display screen. Such user input mechanisms can include buttons, links, icons, or other user actuatable elements that can be actuated using a point and click device, a touch gesture, a voice input, or other interactions. Thus, a user 612 can interact with other items of system 600 via user interface mechanisms 604 such as over networks 606.

Networks 606 can be any of a wide variety of different types of networks such as the Internet, a cellular network, a wide area network (WAN), a local area network (LAN), a controller area network (CAN), a controller area network flexible data-rate (CAN-FD), a near-field communication network, ethernet, or any of a wide variety of other networks.

Other agricultural machines 608 can include any of a wide variety of other agricultural machines including machines similar to agricultural application machine 100 or different (e.g., of a different type) than agricultural application machine 100. Data collected by and generated by machine 100 can be shared with (e.g., over networks 606) other agricultural machines 608 such that the data can be used by the other agricultural machines 608 in their respective operations. Similarly, data collected by and generated by remote computing systems 602 can be shared with (e.g., over networks 606) other agricultural machines 608 such that the data can be used by the other agricultural machines 608 in their respective operations.

Remote computing systems 602 can be a wide variety of different types of systems, or combinations thereof. For example, remote computing systems 602 can be in a remote server environment. Further, remote computing systems 602 can be remote computing systems, such as mobile devices, a remote network, a manager system, a vendor system, or a wide variety of other remote systems. In one example, a machine 100 can be controlled remotely by remote computing systems 602 or by remote users 612, or both. In some examples, operator 156 is on-board (e.g., in an operator compartment of) machine 100. In some examples, operator 156 is remote from the machine 100 and controls the machine 100 through one or more interface mechanisms 154 which are remote from the machine 100 but are operatively coupled (e.g., communicatively coupled, such as over networks 606) to the machine 100.

Communication system 622 can include a bus controller that controls information on one or more bus structures (such as a CAN bus, a plurality of different CAN subnetworks, or another bus) of remote computing systems 602. Communication system 622 can include wired networking components such as ethernet components that operate according to a known standard (e.g., IEEE 802.3), and other types of network and communication system components. Communication system 622 can also include other communication systems that allow remote computing systems 622 to communicate with remote devices or systems. Communication system 622 can include communication systems that allow remote computing systems 602 to communicate over networks 606. Such communication systems can include a cellular communication system, a local area network communication system, a wide area network communication system, a near field communication system, or a wide variety of other communication systems.

Data collected and generated by machine 100 can be shared with remote computing systems 602 over networks 606. Similarly, data collected and generated by remote computing systems 602 can be shared with machine 100 over networks 606.

Data stores 624 store a variety of data, including data describe herein. Additionally, the data stored in data stores 624 can include computer executable instructions that are executable by one or more components of remote computing systems 602 such as those shown in FIG. 6 (e.g., one or processors or servers 620, communication system 622, etc.) or those that may be disposed at remote computing systems 602 according to other contemplated distributions, as discussed below, to implement functionalities of such components. It will be understood that data stores 624 can include different forms of data stores, for instance both volatile data stores (e.g., Random Access Memory (RAM)) and non-volatile data stores (e.g., Read Only Memory (ROM), hard drives, solid state drives, etc.).

It will be understood that items or functionality in system 600 can be distributed in various ways. For example, one or more of the items or functionality shown as being disposed on or performed by machine 100 (e.g., in FIG. 1C) can, additionally, or alternatively, be disposed or performed elsewhere, such as at one or more remote computing systems 602. For example, but not by limitation, processing modules 124 (or at least some of the functionality or components thereof) can instead be disposed at or performed at one or more remote computing systems 602. Additionally, or alternatively, for example, but not by limitation, nozzle body controller 170 (or at least some of the functionality or components thereof) can instead be disposed at or performed at one or more remote computing systems 602. Additionally, or alternatively, for example, but not by limitation, application rate controller 22 (or at least some of the functionality or components thereof) can instead be disposed at or performed at one or more remote computing systems 602. When such items or functionality are disposed or performed remotely from machine 100, such as at remote computing systems 602, their outputs can be communicated to machine 100 over networks 606 such that the outputs can be used by machine 100. These are merely some examples of the distributions contemplated herein.

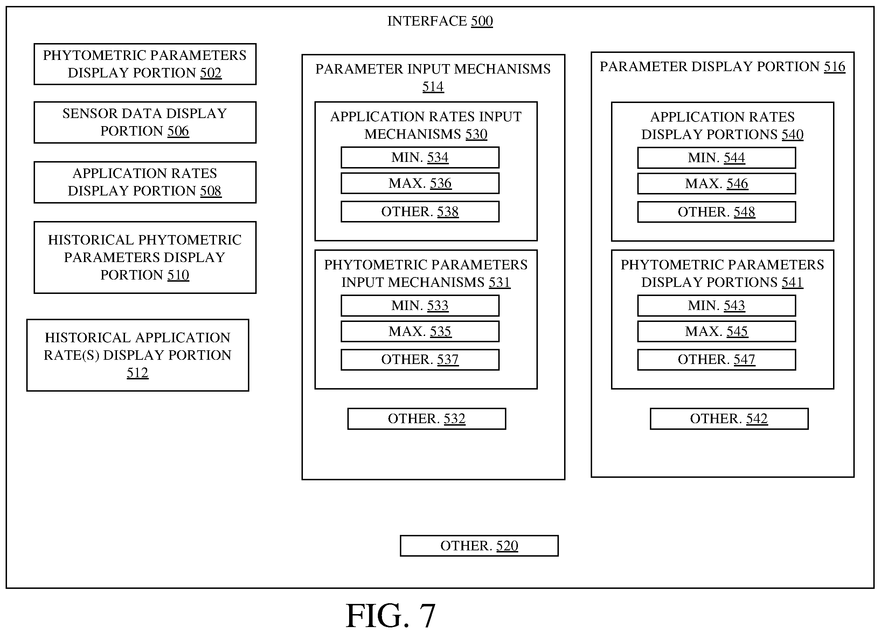

FIG. 7 shows one example of a block diagram of an interface (e.g., display) 500 (also referred to as a variable application rate interface 500 or a phytometric parameter interface 500). Interface 500 can be presented (e.g., displayed) via an interface mechanism, such as an interface mechanism 154 (e.g., a display screen, etc.) or interface mechanism 604 (e.g., display screen, etc.), or both. In some examples, interface controller 175 controls an interface mechanism (e.g., 154, 604) to present (e.g., display) an interface such as interface 500.

Interface 500 includes phytometric parameters display portion 502, sensor data display portion 506, application rates display portion 508, historical phytometric parameters display portion 510, historical application rates display portion 512, parameter input mechanisms 514, parameter display portion 516, and can include various other items 520, as well. Parameter input mechanisms 514 include application rates input mechanisms 530, phytometric parameters input mechanisms 531, and can include other items as well 532. Application rates input mechanisms 530 include minimum application rate input mechanism 534, maximum application rate input mechanism 536, and can include other application rate input mechanisms 538 as well. Phytometric parameters input mechanisms 531 include minimum phytometric parameter input mechanism 533, maximum phytometric parameter input mechanism 535, and can include other phytometric parameter input mechanisms 537 as well. Parameter display portion 516 include application rates display portions 540, phytometric parameters display portions 541, and can include other items 542 as well. Application rates display portions 540 include minimum application rate display portion 544, maximum application rate display portion 546, and can include other application rate display portions 548 as well. Phytometric parameters display portions 541 include minimum phytometric parameter display portion 543, maximum phytometric parameter display portion 545, and can include other phytometric parameter display portions 547 as well.

Phytometric parameters display portion 502 displays phytometric parameters (e.g., biomass, width, height, volume, spectral response etc.) of targets detected by sensors 122 and identified by processing modules 124 that are ahead of the machine 100. Phytometric parameters display portion 502 can display a plurality of phytometric parameters each at a different location (or zone, such as a region of interest of a given sensor 122) across a width of the machine 100 (e.g., width of the boom 118). In this way, an operator or user can observe what is ahead of the machine 100 (e.g., ahead of the boom 118) as the machine 100 travels. The phytometric parameters can be displayed as values (phytometric parameter values) or in other ways.

Sensor data display portion 506 displays sensor data (e.g., images) collected by sensors 122 ahead of the machine 100 (e.g., ahead of the boom). In this way, an operator or user can observe what is being captured by the sensors 122 ahead of the machine 100 (e.g., ahead of the boom 118) as the machine 100 travels. The sensor data may be raw or processed. For example, images can be manipulated (e.g., colored, patterned, etc.) to emphasize targets in the image and to deemphasize non-targets. For example, targets may be displayed in color (or have color added) or patterned whereas non-targets may be displayed in grayscale or displayed in a different pattern. The images across the boom can stitched (e.g., by stitching system 236) to be displayed as a singular image or the separate images can be displayed separately.

Application rates display portion 508 displays the current application rates corresponding to each nozzle body 120 (or at least each active nozzle body 120) on the machine 100. In this way an operator or user can observe how the nozzle bodies 120 are being controlled to apply material, and particularly with the context of the information displayed in portions 502 and 506. The application rates can be displayed as values or in other ways.

Historical phytometric parameters display portion 510 displays historical phytometric parameters (e.g., biomass, width, height, volume, spectral response, etc.) of targets previously detected by sensors 122 and previously identified by processing modules 124 that are behind the machine 100 (e.g., relative to the travel direction or the traveled path). Historical phytometric parameters display portion 510 can display a plurality of historical phytometric parameters each at a different location (or zone, such as a region of interest of a given sensor 122) across a width of the machine 100. In this way, an operator or user can observe what is behind the machine 100 (e.g., behind the boom 118) as the machine 100 travels. In some examples, a running average or a histogram, or some other form of aggregation, of historical phytometric parameters can be displayed, such as a running average or a histogram, or some other form of aggregation, at each of a plurality of different locations (zones, such as regions of interest of the sensors 122) across the width of the machine 100. The historical phytometric parameters can be displayed as values or in other ways. Historical application rates display portion 512 displays historical application rates corresponding to each nozzle body 120 (or at least each nozzle body 120 that has been used) on the machine 100. In this way an operator or user can observe how the nozzle bodies 120 have been controlled to apply material, and particularly with the context of the information displayed in portions 510. Historical application rates display portion 512 can display a plurality of historical application rates each for a different nozzle body 120 across a width of the machine 100. In this way, an operator or user can observe how each nozzle body 120 has performed. In some examples, a running average or a histogram, or some other form of aggregation, of historical application rates can be displayed, such as a running average or a histogram, or some other form of aggregation, for each of the different nozzle bodies 120 across the width of the machine 100. The historical application rates can be displayed as values or in other ways.

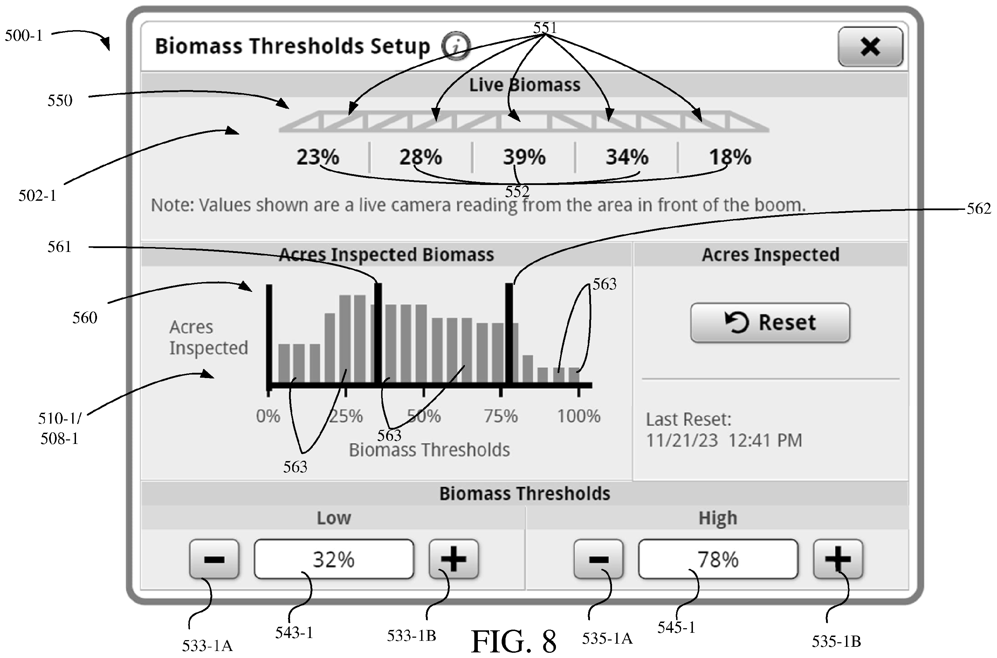

In some examples, elements of interface 500 can be combined (an example of which is shown in FIG. 8).

Parameter input mechanisms 514 are interactable interface elements (e.g., display screen touch buttons, etc.) that provide for user or operator input to select and set parameters useable for control of machine 100. Application rates input mechanisms 530 are interactable interface elements that provide for user or operator input to select and set application rate values. Minimum application rate input mechanism 534 provides for user or operator input to select and set an application rate value corresponding to a minimum (e.g., 402-1, 402-2, 402-3, 402-4 etc.). Maximum application rate input mechanism 536 provides for user or operator input to select and set an application rate corresponding to a maximum (e.g., 404-1, 404-2, 404-3, 404-4 etc.). Other application rate input mechanisms 536 provide for user or operator input to select and set other application rate values, for example, application rate values corresponding to intermediaries (e.g., 408-1, 408-2, etc.) between the minimum and maximum or application rate values when confidence or quality scores are below a threshold.

Phytometric parameters input mechanisms 531 are interactable interface elements that provide for user or operator input to select and set phytometric parameters (or values of phytometric parameters). Minimum phytometric metric parameter input mechanism 533 provides for user or operator input to select and set a phytometric parameter (or phytometric parameter value) corresponding to an application rate value provided via minimum application rate mechanism 534, for instance a phytometric parameter or phytometric parameter value corresponding to a minimum (e.g., 402-1, 402-2, 402-3, 402-4, etc.). Maximum phytometric metric parameter input mechanism 535 provides for user or operator input to select and set a phytometric parameter (or phytometric parameter value) corresponding to an application rate value provided via maximum application rate mechanism 536, for instance a phytometric parameter or phytometric parameter value corresponding to a maximum (e.g., 404-1, 404-2, 404-3, 404-4, etc.). Other phytometric parameter input mechanisms 537 provide for user or operator input to select and set other phytometric parameters (or phytometric parameter values) corresponding to other application rate values (e.g., application rate values corresponding to intermediaries) provided via other application rate mechanisms 538, for instance a phytometric parameter or phytometric parameter value corresponding to each intermediary (e.g., 408-2, 408-2, etc.).

Other parameter input mechanisms 532 provide for user or operator input to select set other operating parameters of other items of machine 100, such as operating parameters of boom position actuators 182, pumps 184, steering subsystem 196, propulsion subsystem 198, as well as other 200 controllable subsystems.

Parameter display portion 516 displays set and selected parameters (e.g., set and selected via parameter input mechanisms). Application rates display portion 540 displays set and selected application rates (e.g., set and selected via application rates input mechanisms 530). Minimum application rate display portion 544 displays the application rate value set and selected via input mechanism 534. Maximum application rate display portion 546 displays the application rate value set and selected via input mechanism 536. Other application rate display portion 548 displays application rate values set and selected via input mechanisms 538. Phytometric parameters display portion 541 displays set and selected phytometric parameters (e.g., set and selected via phytometric parameters input mechanisms 531). Minimum phytometric parameter display portion 543 displays the phytometric parameter (or phytometric parameter value) set and selected via input mechanism 533. Maximum phytometric parameter display portion 545 displays the phytometric parameter (or phytometric parameter value) set and selected via input mechanism 535. Other phytometric parameter display portion 547 displays phytometric parameters (or phytometric parameter values) set and selected via input mechanisms 537. Other parameter display portions 542 display other parameters set and selected via input mechanisms 532. The set and selected parameters of parameter display portion 516 can be displayed as values or in other ways.

FIG. 8 is a pictorial illustration showing one example of interface 500 (illustratively interface 500-1). As shown, interface 500-1 includes one example phytometric parameters display portion 502 (illustratively 502-1), one example application rates display portion 508 (illustratively 508-1), one example historical phytometric parameters display portion 510 (illustratively 510-1), examples of phytometric parameters input mechanisms 531, specifically one example minimum phytometric parameter input mechanism 533 (illustratively 533-1) and one example maximum phytometric parameter input mechanism 535 (illustratively 535-1), one example of phytometric parameters display portions 541, specifically one example minimum phytometric parameter display portion 543 (illustratively 543-1) and one example maximum phytometric parameter display portion 545 (illustratively 545-1).

Phytometric parameters display portion 502-1 illustratively includes a display element 550 pictorially (graphically) representing a width of the machine 100 (e.g., width of boom 118) as well as zone display elements 551 representing zones at different locations across the width of the machine 100 (each zone can be a region of interest of a given sensor 122). Further, as can be seen, phytometric parameters display portion 502-1 further includes a phytometric parameter value display element 552 for each zone that represents the sensed phytometric parameter value in the zone (e.g., region of interest of the given sensor corresponding to the zone).

As shown in the example of FIG. 8, historical phytometric parameter display portion 510 and application rates display portion 508 have been combined into a combined historical phytometric parameter display portion and application rates display portion 510-1/508-1 (hereinafter referred to as portion 510-1/508-1). Portion 510-1/508-1 includes a display element 560, pictorially (graphically) representing a histogram that shows historical phytometric parameter values and application rates during an operation at a worksite (e.g., field). Display element 560 (also called histogram 560) includes a plurality of bars 563. Each bar 563 is located along the X axis of the histogram 560 to correspond to a phytometric parameter value (the X axis of histogram is a scale of phytometric parameter values). The height of each bar 563 indicates the frequency at which targets at the field have had a given phytometric parameter value. Histogram 560 also includes a minimum phytometric parameter value bar 561 which is placed along the X axis at the phytometric parameter value corresponding to a minimum phytometric parameter value provided by a user or operator. The location of bar 561 is changed as the minimum phytometric parameter value (provided by the user or operator) is changed. Histogram 560 also includes a maximum phytometric parameter value bar 562 which is placed along the X axis at the phytometric parameter value corresponding to a maximum phytometric parameter value provided by a user or operator. The location of bar 562 is changed as the maximum phytometric parameter value (provided by the user or operator) is changed. Bars 561 and 562 act to graphically divide bars 563 such that a user or operator can more easily or more quickly determine the frequency with which phytometric parameter values are above the minimum, above the maximum, and between the minimum and maximum.

Further, bars 563 can be differently colored or patterned to indicate whether material is to be (or is currently being) applied to targets having the phytometric parameter value corresponding to the bar as instructed by application rates selected by the user or operator. The color or pattern can also indicate an application rate. For instance, bars 563 below the minimum 561 may be colored or patterned to indicate whether material is to be (or is currently being) applied and the application rate to be (or currently being) used. Bars 563 above the maximum 562 may be colored or patterned to indicate whether material is to be (or is currently being) applied and the application rate to be (or currently being) used. Bars 563 between the minimum 561 and maximum 562 may be colored or patterned to indicate whether material is to be (or is currently being) applied and the application rate to be (or currently being) used.

As shown in FIG. 8, minimum phytometric parameter input mechanism 533-1 includes a decrease input mechanism 533-1A and an increase input mechanism 533-1B. A corresponding minimum phytometric parameter display mechanism 543-1 displays the minimum phytometric parameter value as provided by a user or operator. A user or operator can interact with input mechanisms 533-1A and 533-1B to set the minimum phytometric parameter value (e.g., touch 533-1A to decrease and touch 533-1B to decrease). The location of bar 561 will be set and change based on the interaction with input mechanisms 533-1A and 533-1B. The value displayed in display mechanism 543-1 will be set and change based on the interaction with input mechanisms 533-1A and 533-1B.

Maximum phytometric parameter input mechanism 535-1 includes a decrease input mechanism 535-1A and an increase input mechanism 535-1B. A corresponding maximum phytometric parameter display mechanism 545-1 displays the minimum phytometric parameter value as provided by a user or operator. A user or operator can interact with input mechanisms 535-1A and 535-1B to set the maximum phytometric parameter value (e.g., touch 535-1A to decrease and touch 535-1B to decrease). The location of bar 562 will be set and change based on the interaction with input mechanisms 535-1A and 535-1B. The value displayed in display mechanism 545-1 will be set and change based on the interaction with input mechanisms 535-1A and 535-1B.

The minimum and maximum phytometric parameter values provided through interface 500-1 comprise a part of target application rate (TAR) data 351 and can define an application rate function. Thus, the minimum and maximum phytometric parameter values provided through interface 500-1 can be used by application rate controller 222 to determine application rates (e.g., TARs).

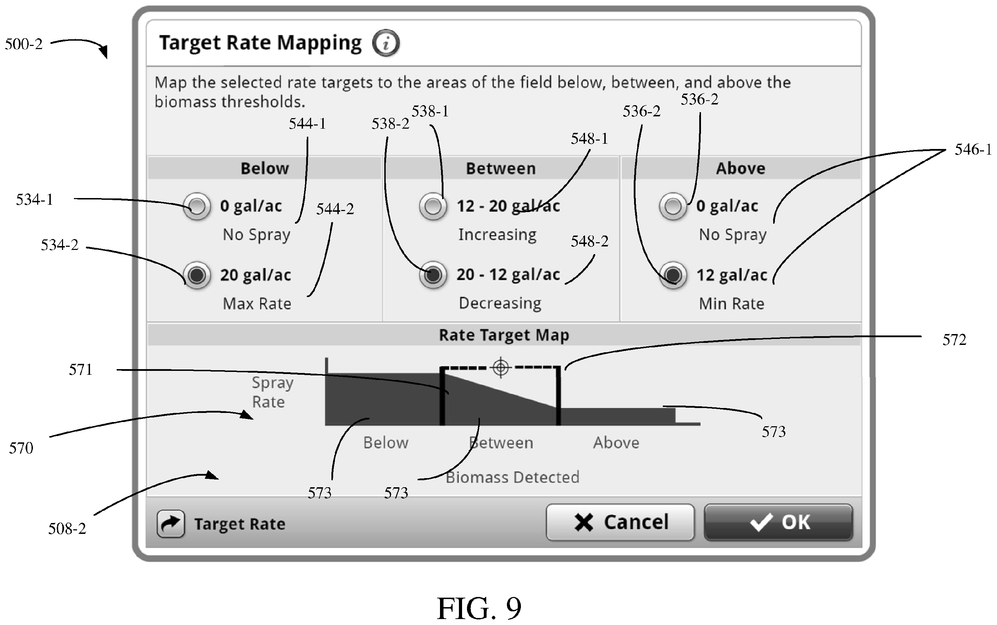

Additionally, while the example shown in FIG. 8 shows the phytometric parameter as biomass with phytometric parameter values as percentages representing the ratio of pixels of an image having a pixel value corresponding to a target to the total number of pixels of the image, it will be understood that in other examples, other phytometric parameters (e.g., width, height, volume, spectral response, etc.) can be shown and other phytometric parameters values can be shown. FIG. 9 is a pictorial illustration showing one example of interface 500 (illustratively interface 500-2). As shown, interface 500-2 includes one example application rates display portion 508 (illustratively 508-2), examples of application rates input mechanisms 530, specifically examples of minimum application rate input mechanisms 534 (illustratively 534-1, and 534-2), examples of maximum application rate input mechanisms 536 (illustratively 536-1, 536-2), and examples of other application rate input mechanisms 538 (illustratively 538-1, 538-2). Interface 500-2 further includes one example of application rate display portions 540, specifically examples of minimum application rates display portions 544 (illustratively 544-1, 544-2), examples of maximum application rates display portions 546 (illustratively 546-1. 546-2), and examples of other application rate display portions 548 (illustratively 548-1, 548-2).

As shown in the example of FIG. 9,. Application rates display portion 508-2 includes a display element 570, pictorially (graphically) representing a bar graph that shows application rates during an operation at a worksite (e.g., field). Display element 570 (also called graph 570) includes a plurality of bars 573. Each bar 573 is distributed along the X axis of the histogram 570 to correspond to a phytometric parameter value range relative to a target phytometric parameter value range (e.g., the range defined by minimum and maximum phytometric parameter values). For instance, as shown in FIG. 9, one bar 573 (leftmost) is distributed along the X axis to represent phytometric parameter values below the minimum phytometric parameter value (indicated by bar 571), one bar 573 (middle) is distributed along the X axis to represent phytometric parameter values between the minimum phytometric parameter value (indicated by bar 571) and the maximum phytometric parameter value (indicated by bar 572), and one bar 573 (rightmost) is distribute along the X axis to represent phytometric parameter values above the maximum phytometric parameter value (indicated by bar 573).. The slope or height of each bar 573 indicates an application rate applied to targets having a phytometric parameter value corresponding to the phytometric parameter value (or value range) corresponding to the given bar 573 (e.g. indicate application rate applied to targets below the minimum (height or slope of leftmost bar 573), indicate application rate applied to targets between the minimum and maximum (height or slope of middle bar 573), and indicate the application rate applied to targets above the maximum (height or slope of rightmost bar 573).. Graph 570 also includes a minimum phytometric parameter value bar 571 which is placed along the X axis at the phytometric parameter value corresponding to a minimum phytometric parameter value provided by a user or operator. The location of bar 571 is changed as the minimum phytometric parameter value (provided by the user or operator) is changed. Graph 570 also includes a maximum phytometric parameter value bar 572 which is placed along the X axis at the phytometric parameter value corresponding to a maximum phytometric parameter value provided by a user or operator. The location of bar 572 is changed as the maximum phytometric parameter value (provided by the user or operator) is changed. Bars 571 and 572 act to graphically divide bars 573 such that a user or operator can more easily or more quickly determine the frequency with which phytometric parameter values are above the minimum, above the maximum, and between the minimum and maximum. In one example, the minimum and maximum corresponding to bars 571 and 572, respectively, can be provided by a user or operator through interface mechanisms 531 (e.g., 533-1A, 533-1B, 535-1A, and 535-1B). As shown in FIG. 9, the Y axis of the graph 570 corresponds to application rate values (illustratively spray rate values) and the height or slope (heights along the width) of each bar 573 corresponds to value(s) on the Y axis.

Further, bars 573 can be differently colored or patterned to indicate whether material is to be (or is currently being) applied to targets having the phytometric parameter value corresponding to the bar 573 as instructed by application rates selected by the user or operator. For instance, bar 573 below the minimum 571 may be colored or patterned to indicate whether material is to be (or is currently being) applied and further, as mentioned, the height or slope of the bar 573 indicates the application rate to be (or currently being) used. Bar 573 above the maximum 572 may be colored or patterned to indicate whether material is to be (or is currently being) applied and further, as mentioned, the height or slope of the bar 573 indicates the application rate to be (or currently being) used. Bar 573 between the minimum 571 and maximum 572 may be colored or patterned to indicate whether material is to be (or is currently being) applied and further, as mentioned, the height or slope of the bar 573 indicates the application rate to be (or currently being) used. As shown in FIG. 9, the example minimum application rate input mechanism 534 includes a plurality of input mechanisms (e.g., buttons) 534-1 and 534-2, each interactable to select a different application rate (as indicated by the corresponding minimum application rate display mechanisms 544-1 and 544-2). Corresponding minimum application rate display mechanisms 544-1 and 544-2 display the minimum application rates (application rates for phytometric parameter values below the minimum 571) selectable by a user or operator via interaction with input mechanism 534-1 and 534-2. The application rate values shown in the example display mechanisms 544-1 and 544-2 are examples only, and can, in other examples, include any of a variety of other values including, for instance, other values, value ranges or no application rate to indicate that material is not to be applied. In the example shown in FIG. 9, a user or operator can interact with input mechanisms 534-1 or 534-2 to set the application rate for targets having a phytometric parameter value at and/or below the minimum phytometric parameter value (as represented by bar 571). The color or pattern of the bar 573 below the bar 571 may change based on the interaction with input mechanisms 534-1 and 534-2. Additionally, the height or slope of the bar 573 below the bar 571 may change based on the interaction with input mechanisms 534-1 and 534-2.

The example maximum application rate input mechanism 536 and includes a plurality of input mechanisms (e.g., buttons) 536-1 and 536-2, each interactable to select a different application rate (as indicated by the corresponding maximum application rate display mechanisms 546-1 and 546-2). Corresponding minimum application rate display mechanisms 546-1 and 546-2 display the maximum application rates (application rates for phytometric parameter values above the maximum 572) selectable by a user or operator selectable via interaction with input mechanisms 536-1 and 536-2. The application rate values shown in the example display mechanisms 546-1 and 546-2 are examples only, and can, in other examples, include any of a variety of other values including, for instance, other values, value ranges or no application rate to indicate that material is not to be applied. In the example shown in FIG. 9, a user or operator can interact with input mechanisms 536-1 and 536-2 to set the application rate for targets having a phytometric parameter value at and/or above the maximum phytometric parameter value (as represented by bar 572). The color or pattern of the bar 573 above the bar 572 may change based on the interaction with input mechanisms 536-1 and 536-2. Additionally, the height or slope of the bar 573 above the bar 572 may change based on the interaction with input mechanism 536-1 and 536-2.

The example other application rate input mechanism 538 includes a plurality of input mechanisms (e.g., buttons) 538-1 and 538-2, each interactable to select a different application rate (as indicated by the corresponding other application rate display mechanisms 548-1 and 548-2). Corresponding other application rate display mechanisms 548-1 and 548-2 display the other application rates (e.g., intermediary application rates, the application rates applied to phytometric parameter values between the minimum 571 and the maximum 572) selectable by a user or operator selectable via interaction with input mechanisms 538-1 and 538-2. The application rate values shown in the example display mechanisms 548-1 and 548-2 are value ranges. Thus, the bar 573 (middle bar) has a slope to indicate the selected range of values. In the illustrated example, 538-2 has received input to select the application rate of 20 - 12 gallons an acre decreasing, whereby, the application rate decreases towards 12 gallons an acre as the detected phytometric parameter approaches the maximum 572 and whereby, the application rate increases towards 20 gallons an acre as the detected phytometric parameter approaches the minimum 571. If, in the illustrated example, 538-1 received input to select the application rate 12 - 20 gallons an acre increasing, the application rate would increase towards 20 gallons an acre as the detected phytometric parameter approached the maximum 572 and would decrease towards 12 gallons an acre as the detected phytometric parameter approached the minimum 571, The application rate values shown in the example display mechanisms 548-1 and 548-2 are examples only, and can, in other examples, include any of a variety of other values including, for instance, other values, other value ranges, no application rate to indicate that material is not to be applied. In the example shown in FIG. 9, a user or operator can interact with input mechanisms 538-1 and 538-2 to set the application rate for targets having a phytometric parameter value between the minimum and maximum phytometric parameter values (as represented by bars 571 and 572, respectively). The color or pattern of the bar 573 between the bar 571 and the bar 572 may change based on the interaction with input mechanisms 538-1 and 538-2. Additionally, the height or slope of the bar 573 between the bar 571 and the bar 572 may change based on the interaction with input mechanism 538-1 and 538-2.

The minimum, maximum, and other (e.g., intermediary) application rate values provided through interface 500-2 comprise a part of target application rate (TAR) data 351 and can define an application rate function. Thus, the minimum, maximum, and other (e.g., intermediary) application rate values provided through interface 500-2 can be used by application rate controller 222 to determine application rates (e.g., TARs).

Additionally, while the example shown in FIG. 9 shows the phytometric parameter as biomass, it will be understood that in other examples, other phytometric parameters (e.g., width, height, volume, spectral response, etc.) can be shown.

It will be also be understood that while the examples shown in FIGS. 8 and 9 are shown as separate interfaces 500, in other examples, the example interfaces shown in FIGS. 8 and 9 can instead be portions of a singular interface 500 and displayed simultaneously.

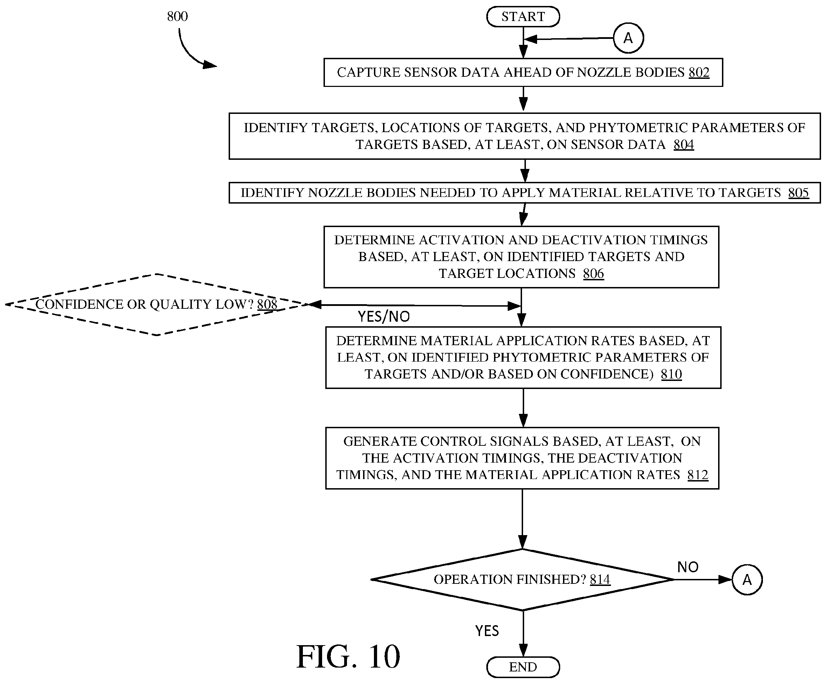

FIG. 10 displays a flowchart showing one example operation 800 of system 600. At block 802, sensors 122 capture sensor data (e.g., images) ahead of nozzle bodies 120 at a worksite, relative to the travel direction or planned route of agricultural application machine 100.

At block 804, system 600 (e.g., processing modules 124) identifies targets in the sensor data, the locations of the targets in the sensor data, and phytometric parameter(s) (e.g., biomass, width, height, volume, spectral response etc.) of targets in the sensor data. For example, target identifier system 242 can identify targets in the sensor data (e.g., images, etc.) captured by sensors 122. Examples of system 600 (e.g., target identifier system 242) identifying targets in sensor data captured by sensors 122 have been previously described. Those examples are incorporated in operation 800. Target location identifier system 243 identifies locations of targets in the sensor data captured by sensors 122. Examples of system 600 (e.g., target location identifier system 243) identifying locations of targets in the sensor data captured by sensors 122 have been previously described. Those examples are incorporated in operation 800. Phytometric parameter identifier system 240 identifies phytometric parameter(s) (e.g., biomass, width, height, volume, spectral response, etc.) of targets in the sensor data captured by sensors 122. Examples of system 600 (e.g., phytometric parameter identifier system 240) identifying phytometric parameter(s) of targets in the sensor data captured by sensors 122 have been previously described. Those examples are incorporated in operation 800.

At block 805, system 600 (e.g., processing modules 124) identifies one or more nozzle bodies 120 needed to apply material relative to the identified targets. For example, nozzle body identifier system 244 can identify the one or more nozzle bodies needed to apply material relative to the identified targets. Examples of system 600 (e.g., nozzle body identifier system 244) identifying the one or more nozzle bodies needed to apply material relative to the identified targets have been previously described. Those examples are incorporated in operation 800.

At block 806, system 600 (e.g., nozzle body controller 170) determines activation timings and deactivation timings for each of the one or more identified nozzle bodies 120 based, at least, on the identified targets and target locations. For example, activation/deactivation controller 342 can determine activation and deactivation timings for each of the one or more identified nozzle bodies 120. Examples of system 600 (e.g., activation/deactivation controller 342) determining activation and deactivation timings for each of the one or more identified nozzles have been previously described. Those examples are incorporated in operation 800.

In one example, at block 810, system 600 (e.g., nozzle body controller 170) determines material application rates (e.g., target material application rates (TARS)) for each of the one or more identified nozzle bodies 120 based, at least, on the identified phytometric parameter(s) (e.g., biomass, width, height, volume, spectral response, etc.) of targets in the sensor data captured by sensors 122. For example, application rate controller 222 can determine material application rates for each of the one or more identified nozzle bodies 120 based, at least, on the identified phytometric parameter(s) of targets in the sensor data captured by sensors 122. Examples of system 600 (e.g., application rate controller 222) determining material application rates for each of the one or more identified nozzle bodies 120 based, at least, on the identified phytometric parameter(s) of targets in the sensor data captured by sensors 122 have been previously described. Those examples are incorporated in operation 800.

In one example, at block 810, system 600 (e.g., nozzle body controller 170) determines material application rates (e.g., target material application rates (TARS)) for each of the one or more identified nozzle bodies 120 (or for one or more of the one or more identified nozzle bodies 120) based, at least, on confidence scores or quality scores determined by system 600. As shown, at block 808, in some examples, system 600 (e.g. processing modules 124) determines confidence scores or quality scores. For example, confidence level generator 234 can determine confidence scores or quality scores based on a number of criteria (examples of which have been previously described). System 600 (e.g., nozzle body controller 170) then determines if the confidence scores or quality scores are too low (e.g., relative to corresponding thresholds). For example, material application rate controller 222 can determine if confidence scores or quality scores are too low (e.g., relative to corresponding thresholds) and can identify a material application rate for each of the one or more affected nozzle bodies (affected by the low confidence score or low quality score, or both) accordingly. Examples of system 600 (e.g., material application rate controller 222) determining material application rates based on confidence scores or quality scores have been previously described. Those examples are incorporated in operation 800.

It will be noted, as previously described, that in some examples at block 810 material application rates can be determined based on both identified phytometric parameter(s) and confidence scores or quality scores. For example, low confidence scores or low quality scores may only correspond to a subset of the one or more identified nozzle bodies 120, in which case, material application rates for the one or more nozzle bodies 120 of that subset are determined based, at least, on the confidence scores or quality scores. An additional subset of the one or more identified nozzle bodies 120 may not be affected by the low confidence scores or low quality scores, in which case, the material application rates for the one or more nozzle bodies 120 of the additional subset are determined based, at least, on identified phytometric parameter(s). Examples of this have been previously described and are incorporated in operation 800.

At block 812, system 600 (e.g., control system 160, controller 192) generates control signals to control one or more items of system 600 based, at least, on the identified activation timings, the identified deactivation timings, and the identified material application rates. For example, each controller 192 of an identified nozzle body 120 can control a corresponding actuator 190 (e.g., valve) based on a corresponding activation timing, a corresponding deactivation timing, and a corresponding material application rate. Examples of controllers 192 controlling actuators 190 based on activations timings, deactivation timings, and material application rates have been previously described and incorporated in operation 800. Additionally, or alternatively, pump controller 172 can generate control signals to control one or more pumps 184 to pump material from each of one or more tanks 110 based on activation timings, deactivation timings, and material application rates. Examples of pump controller 174 controlling pumps 184 based on activation timings, deactivation timings, and material application rates have been previously described and are incorporated in operation 800. In other examples, other controllers of control system 160 can control items of system 600 based on activation timings, deactivation timings, and material application rates.

At block 814, it is determined if the agricultural application operation at the worksite has been completed. If, at block 814, it is determined that the agricultural application operation has not been completed, then processing returns to block 802. If, at block 814, it is determined that the agricultural application operation has been completed, then operation 800 ends.

The present discussion has mentioned processors and servers. In one embodiment, the processors and servers include computer processors with associated memory and timing circuitry, not separately shown. They are functional parts of the systems or devices to which they belong and are activated by, and facilitate the functionality of the other components or items in those systems. Also, a number of operator and user interface displays have been discussed. The interface displays can take a wide variety of different forms and can have a wide variety of different operator or user actuatable input mechanisms disposed thereon. For instance, the operator or user actuatable input mechanisms can be text boxes, check boxes, icons, links, drop-down menus, search boxes, etc. The mechanisms can also be actuated in a wide variety of different ways. For instance, they can be actuated using a point and click device (such as a track ball or mouse). The mechanisms can be actuated using hardware buttons, switches, a joystick or keyboard, thumb switches or thumb pads, etc. They can also be actuated using a virtual keyboard or other virtual actuators. In addition, where the screen on which the mechanisms are displayed is a touch sensitive screen, they can be actuated using touch gestures. Also, where the device that displays them has speech recognition components, the mechanisms can be actuated using speech commands.

A number of data stores have also been discussed. It will be noted the data store discussed herein can each be broken into multiple data stores. All can be local to the systems accessing them, all can be remote, or some can be local while others are remote. All of these configurations are contemplated herein.

Also, the figures show a number of blocks with functionality ascribed to each block. It will be noted that fewer blocks can be used so the functionality is performed by fewer components. Also, more blocks can be used with the functionality distributed among more components.

It will be noted that the above discussion has described a variety of different systems, controllers, generators, modules, generators and other components. It will be appreciated that such systems, controllers, generators, modules, generators and other components can be comprised of hardware items (such as processors and associated memory, or other processing components, some of which are described below) that perform the functions associated with those systems, controllers, generators, modules, generators and other components. In addition, the systems, controllers, generators, modules, generators and other components can be comprised of software that is loaded into a memory and is subsequently executed by a processor or server, or other computing component, as described herein. The systems, controllers, generators, modules, generators and other components can also be comprised of different combinations of hardware, software, firmware, etc., some examples of which are described herein. These are only some examples of different structures that can be used to form the systems, controllers, generators, modules, generators and other components described above. Other structures can be used as well.

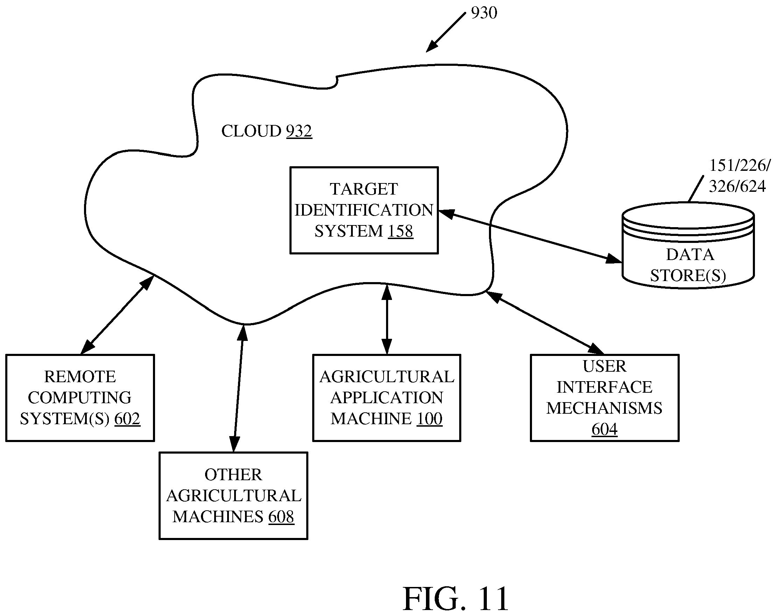

FIG.11 is a block diagram of system 600, except that it communicates with elements in a remote server architecture 930. In one example, remote server architecture 930 can provide computation, software, data access, and storage services that do not require end-user knowledge of the physical location or configuration of the system that delivers the services. In various examples, remote servers can deliver the services over a wide area network, such as the internet, using appropriate protocols. For instance, remote servers can deliver applications over a wide area network and they can be accessed through a web browser or any other computing component. Software or components shown in previous FIGS. as well as the corresponding data, can be stored on servers at a remote location. The computing resources in a remote server environment can be consolidated at a remote data center location or they can be dispersed. Remote server infrastructures can deliver services through shared data centers, even though they appear as a single point of access for the user. Thus, the components and functions described herein can be provided from a remote server at a remote location using a remote server architecture. Alternatively, they can be provided from a conventional server, or they can be installed on client devices directly, or in other ways.

In the example shown in FIG. 11, some items are similar to those shown in previous FIGS. and they are similarly numbered. FIG. 11 specifically shows that target identification system 158 (or components or functionality thereof) and one or more of data stores 151, 226, 326, and 624 can be located at a remote server location 932. These are merely some examples, other components shown in previous FIGS. can also be located at remote server location 932. Therefore, machine 100, remote computing systems 602, user interface mechanisms 604, other agricultural machines 608, accesses those components (or functionality) through remote server location 932.

It is also contemplated that some elements of previous FIGS. can be disposed at remote server location 932 while others are not. By way of example, one or more of data stores 151, 226, 326, and 624 can be disposed at a location separate from location 932, and accessed through the remote server at location 932. Regardless of where they are located, they can be accessed directly by machine 100, remote computing systems 602, user interface mechanisms 604, and other agricultural machines 608, through a network (either a wide area network or a local area network), they can be hosted at a remote site by a service, or they can be provided as a service, or accessed by a connection service that resides in a remote location. Also, the data can be stored in substantially any location and intermittently accessed by, or forwarded to, interested parties. For instance, physical carriers can be used instead of, or in addition to, electromagnetic wave carriers. In such an example, where cell coverage is poor or nonexistent, another mobile machine (such as a fuel truck) can have an automated information collection system. As the machine 100 comes close to the fuel truck for fueling, the system automatically collects the information from the machine 100 using any type of ad-hoc wireless connection. The collected information can then be forwarded to the main network as the fuel truck reaches a location where there is cellular coverage (or other wireless coverage). For instance, the fuel truck may enter a covered location when traveling to fuel other machines or when at a main fuel storage location. All of these architectures are contemplated herein. Further, the information can be stored on the machine 100 until the machine 100 enters a covered location. The machine 100, itself, can then send the information to the main network.

It will also be noted that components of previous FIGS., or portions of them, can be disposed on a wide variety of different devices. Some of those devices include servers, desktop computers, laptop computers, tablet computers, or other mobile devices, such as palm top computers, cell phones, smart phones, multimedia players, personal digital assistants, etc.

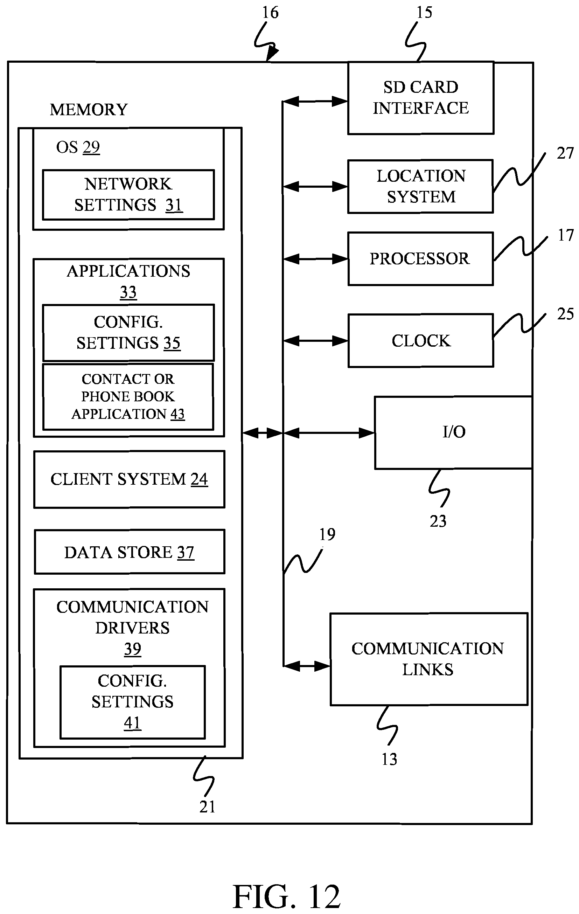

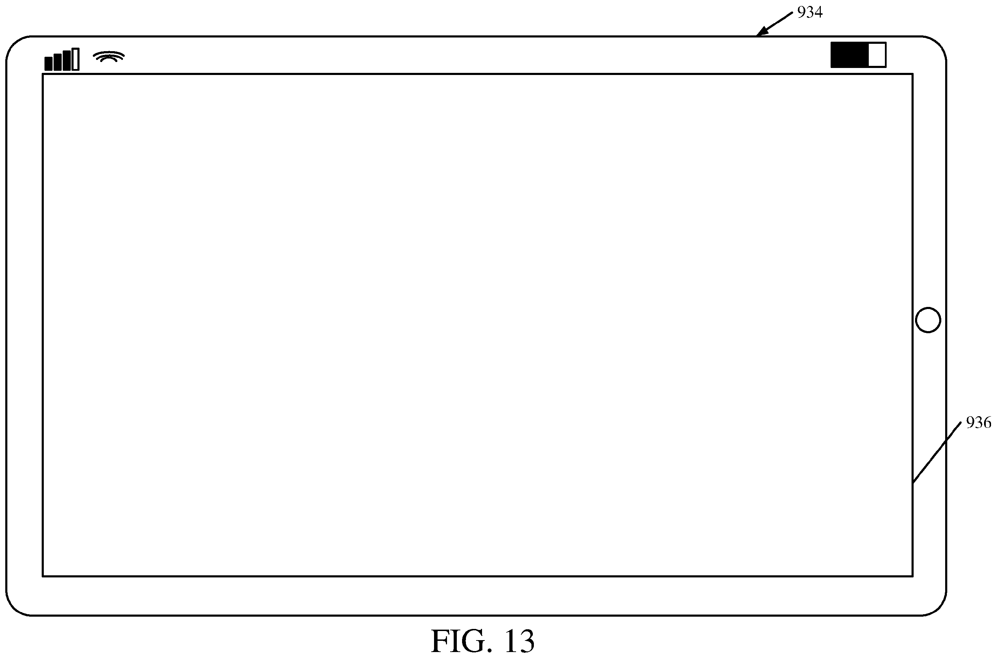

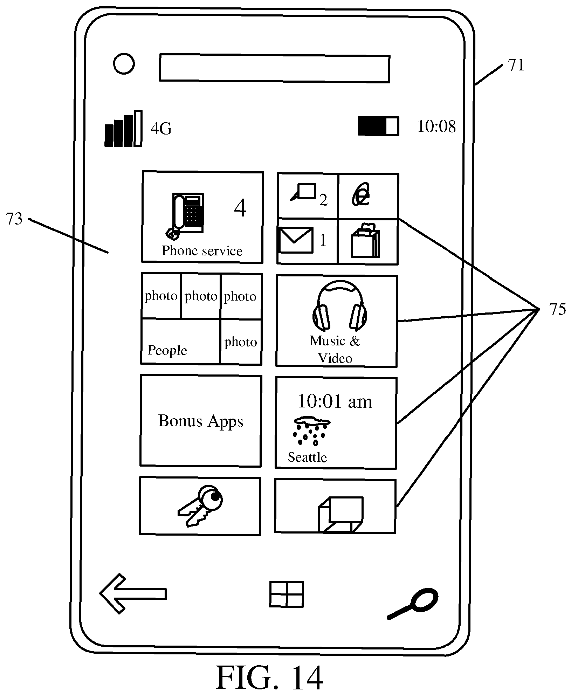

FIG. 12 is a simplified block diagram of one illustrative example of a handheld or mobile computing device that can be used as a hand held device 16, in which the present system (or parts of it) can be deployed. For instance, a mobile device can be deployed in the operator compartment of machine 100 for use in generating, processing, or displaying the data collected or generated by system 600. FIGS. 13 and 14 are examples of handheld or mobile devices.

FIG. 12 provides a general block diagram of the components of a client device 16 that can run some components shown in previous FIGS., that interacts with them, or both. In the device 16, a communications link 13 is provided that allows the handheld device to communicate with other computing devices and under some embodiments provides a channel for receiving information automatically, such as by scanning. Examples of communications link 13 include allowing communication though one or more communication protocols, such as wireless services used to provide cellular access to a network, as well as protocols that provide local wireless connections to networks.

In other examples, applications can be received on a removable Secure Digital (SD) card that is connected to an interface 15. Interface 15 and communication links 13 communicate with a processor 17 (which can also embody processors from previous FIGS.) along a bus 19 that is also connected to memory 21 and input/output (I/O) components 23, as well as clock 25 and location system 27.

I/O components 23, in one embodiment, are provided to facilitate input and output operations. I/O components 23 for various embodiments of the device 16 can include input components such as buttons, touch sensors, optical sensors, microphones, touch screens, proximity sensors, accelerometers, orientation sensors and output components such as a display device, a speaker, and or a printer port. Other I/O components 23 can be used as well.

Clock 25 illustratively comprises a real time clock component that outputs a time and date. It can also, illustratively, provide timing functions for processor 17.

Location system 27 illustratively includes a component that outputs a current geographical location of device 16. This can include, for instance, a global positioning system (GPS) receiver, a LORAN system, a dead reckoning system, a cellular triangulation system, or other positioning system. It can also include, for example, mapping software or navigation software that generates desired maps, navigation routes and other geographic functions.

Memory 21 stores operating system 29, network settings 31, applications 33, application configuration settings 35, data store 37, communication drivers 39, and communication configuration settings 41. Memory 21 can include all types of tangible volatile and non-volatile computer-readable memory devices. It can also include computer storage media (described below). Memory 21 stores computer readable instructions that, when executed by processor 17, cause the processor to perform computer-implemented steps or functions according to the instructions. Processor 17 can be activated by other components to facilitate their functionality as well.

FIG. 13 shows one example in which device 16 is a tablet computer 934. In FIG. 13, computer 934 is shown with user interface display screen 936. Screen 936 can be a touch screen or a pen-enabled interface that receives inputs from a pen or stylus. It can also use an on-screen virtual keyboard. Of course, it might also be attached to a keyboard or other user input device through a suitable attachment mechanism, such as a wireless link or USB port, for instance. Computer 934 can also illustratively receive voice inputs as well.

FIG. 14 shows that the device can be a smart phone 71. Smart phone 71 has a touch sensitive display 73 that displays icons or tiles or other user input mechanisms 75. Mechanisms 75 can be used by a user to run applications, make calls, perform data transfer operations, etc. In general, smart phone 71 is built on a mobile operating system and offers more advanced computing capability and connectivity than a feature phone.

Note that other forms of the devices 16 are possible.

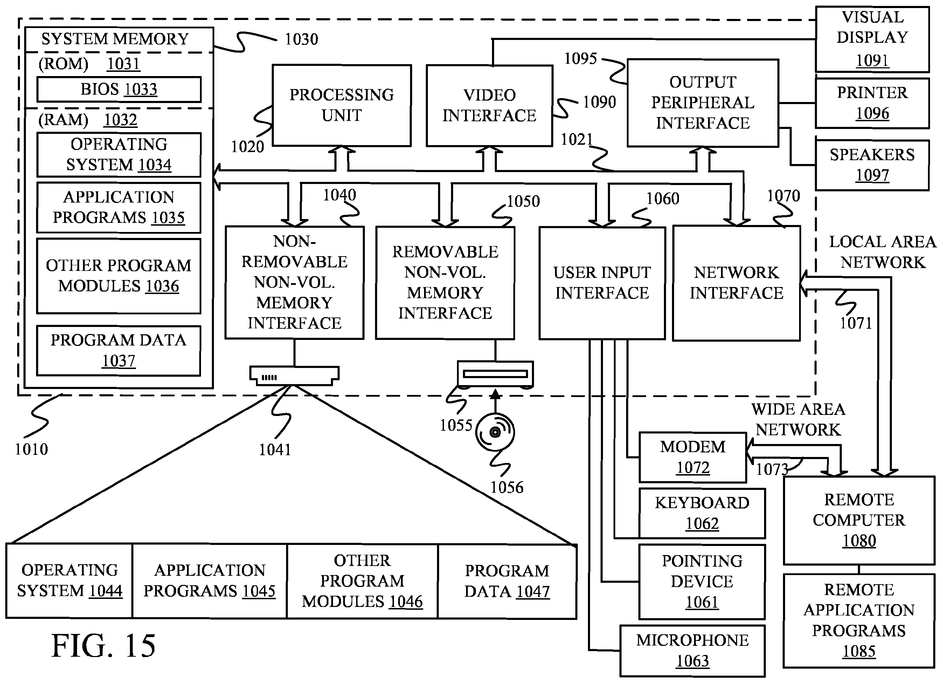

FIG. 15 is one example of a computing environment in which components of previous FIGS., or parts of them, (for example) can be deployed. With reference to FIG. 15, an example system for implementing some embodiments includes a computing device in the form of a computer 1010 programmed to operate as described above. Components of computer 1010 may include, but are not limited to, a processing unit 1020 (which can comprise processors from previous FIGS.), a system memory 1030, and a system bus 1021 that couples various system components including the system memory to the processing unit 1020. The system bus 1021 may be any of several types of bus structures including a memory bus or memory controller, a peripheral bus, and a local bus using any of a variety of bus architectures. Memory and programs described with respect to previous FIGS. can be deployed in corresponding portions of FIG. 15.

Computer 1010 typically includes a variety of computer readable media. Computer readable media can be any available media that can be accessed by computer 1010 and includes both volatile and nonvolatile media, removable and non-removable media. By way of example, and not limitation, computer readable media may comprise computer storage media and communication media. Computer storage media is different from, and does not include, a modulated data signal or carrier wave. It includes hardware storage media including both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 1010. Communication media may embody computer readable instructions, data structures, program modules or other data in a transport mechanism and includes any information delivery media. The term "modulated data signal" means a signal that has one or more of its characteristics set or changed in such a manner as to encode information in the signal. The system memory 1030 includes computer storage media in the form of volatile and/or nonvolatile memory such as read only memory (ROM) 1031 and random access memory (RAM) 832. A basic input/output system 1033 (BIOS), containing the basic routines that help to transfer information between elements within computer 1010, such as during start-up, is typically stored in ROM 1031. RAM 1032 typically contains data and/or program modules that are immediately accessible to and/or presently being operated on by processing unit 1020. By way of example, and not limitation, FIG. 15 illustrates operating system 1034, application programs 1035, other program modules 1036, and program data 1037.

The computer 1010 may also include other removable/non-removable volatile/nonvolatile computer storage media. By way of example only, FIG. 15 illustrates a hard disk drive 1041 that reads from or writes to non-removable, nonvolatile magnetic media, an optical disk drive 1055, and nonvolatile optical disk 1056. The hard disk drive 1041 is typically connected to the system bus 1021 through a non-removable memory interface such as interface 1040, and optical disk drive 1055 are typically connected to the system bus 1021 by a removable memory interface, such as interface 1050.

Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (e.g., ASICs), Application-specific Standard Products (e.g., ASSPs), System-on-a-chip systems (SOCs), Complex Programmable Logic Devices (CPLDs), etc.

The drives and their associated computer storage media discussed above and illustrated in FIG. 15, provide storage of computer readable instructions, data structures, program modules and other data for the computer 1010. In FIG. 15, for example, hard disk drive 1041 is illustrated as storing operating system 1044, application programs 1045, other program modules 1046, and program data 1047. Note that these components can either be the same as or different from operating system 834, application programs 1035, other program modules 1036, and program data 1037.

A user may enter commands and information into the computer 1010 through input devices such as a keyboard 1062, a microphone 1063, and a pointing device 1061, such as a mouse, trackball or touch pad. Other input devices (not shown) may include a joystick, game pad, satellite dish, scanner, or the like. These and other input devices are often connected to the processing unit 1020 through a user input interface 1060 that is coupled to the system bus, but may be connected by other interface and bus structures. A visual display 1091 or other type of display device is also connected to the system bus 1021 via an interface, such as a video interface 1090. In addition to the monitor, computers may also include other peripheral output devices such as speakers 1097 and printer 1096, which may be connected through an output peripheral interface 1095.

The computer 1010 is operated in a networked environment using logical connections (such as a controller area network - CAN, local area network - LAN, or wide area network WAN) to one or more remote computers, such as a remote computer 1080.

When used in a LAN networking environment, the computer 1010 is connected to the LAN 1071 through a network interface or adapter 1070. When used in a WAN networking environment, the computer 1010 typically includes a modem 1072 or other means for establishing communications over the WAN 1073, such as the Internet. In a networked environment, program modules may be stored in a remote memory storage device. FIG. 15 illustrates, for example, that remote application programs 1085 can reside on remote computer 1080.

## Claims

1. An agricultural application machine (100) comprising:
a material reservoir (110);
a pump (184) configured to pump a material from the material reservoir (110);
a nozzle body (120);
a sensor (122) configured to capture an image of a portion of a field ahead of the nozzle body (120) relative to a direction of travel of the agricultural application machine (100);
one or more processors (150, 224, 324, 620); and
memory (151, 226, 326, 624) storing instructions executable by the one or more processors (150, 224, 324, 620) that, when executed by the one or more processors (150, 224, 324, 620), configure the agricultural application machine (100) to:
identify (804) based, at least, on the image, a target in the image;
identify (804) based, at least, on the image, a phytometric parameter value of the target in the image;
determine (810) a target application rate based, at least, on the phytometric parameter value of the target in the image; and
control (812) one or more of the pump (184) and the nozzle body (120) based, at least, on the target application rate.

2. The agricultural application machine (100) of claim 1, wherein the instructions, when executed by the one or more processors (150, 224, 324, 620), further configure the agricultural application machine (100) to:
identify, based, at least, on the image, a width of the target in the image;
identify a height of the target based, at least, on the width of the target in the image; and
identify the phytometric parameter value of the target in the image based, at least, on the width of the target in the image and the height of the target in the image.

3. The agricultural application machine (100) of claim 1 or 2, wherein the instructions, when executed by the one or more processors (150, 224, 324, 620), further configure the agricultural application machine (100) to:
identify, based, at least, on the image, a width of the target in the image;
identify, based, at least, on the image, a height of the target in the image; and
identify the phytometric parameter value of the target in the image based, at least, on the width of the target in the image and the height of the target in the image.

4. The agricultural application machine (100) of one of the claims 1 to 3, wherein the instructions, when executed by the one or more processors (150, 224, 324, 620), further configure the agricultural application machine (100) to:
identify, based, at least, on the image, color values of the image; and
identify the phytometric parameter value of the target in the image based, at least, on the color values of the image.

5. The agricultural application machine (100) of one of the claims 1 to 4, wherein the instructions, when executed by the one or more processors (150, 224, 324, 620), further configure the agricultural application machine (100) to:
identify, based, at least, on the image, spectral response values of the image; and
identify the phytometric parameter value of the target in the image based, at least, on the spectral response values of the image.

6. The agricultural application machine (100) of one of the claims 1 to 5, wherein the instructions, when executed by the one or more processors (150, 224, 324, 620), further configure the agricultural application machine (100) to:
identify, based, at least, on the image, a number of pixels of the image having a pixel value corresponding to a reference pixel value or a reference pixel value range;
identify a total number of pixels of the image;
identify a ratio of the number of pixels of the image having the pixel value corresponding to the reference pixel value or reference pixel value range to the total number of pixels in the image; and
identify the phytometric parameter value of the target in the image based, at least, on the ratio of the number of pixels of the image having the pixel value corresponding to the reference pixel value or reference pixel value range to the total number of pixels in the image.

7. The agricultural application machine (100) of one of the claims 1 to 6, wherein the instructions, when executed by the one or more processors (150, 224, 324, 620), further configure the agricultural application machine (100) to:
(i) identify a pulse width modulation (PWM) parameter based on the target application rate and control the nozzle body (120) based, at least, on the pulse width modulation parameter; or
(ii) control the pump (184) to control a flow of the material from the material reservoir (110) based, at least, on the target application rate.

8. The agricultural application machine (100) of one of the claims 1 to 7, wherein the material reservoir (110) comprises a first material reservoir, wherein the pump (184) comprises a first pump configured to pump a first material from the first material reservoir, the agricultural application machine (100) further comprises a second material reservoir and a second pump configure to pump a second material from the second material reservoir, wherein the instructions, when executed by the one or more processors (150, 224, 324, 620), further configure the agricultural application machine (100) to:
control, based, at least, on the target application rate, the first pump to control a flow of the first material from the first material reservoir; and
control, based, at least, on the target application rate, the second pump to control a flow of the second material from the second material reservoir.

9. The agricultural application machine (100) of one of the claims 1 to 8, wherein the instructions, when executed by the one or more processors (150, 224, 324, 620), further configure the agricultural application machine (100) to:
obtain target application rate data, wherein the target application rate data describes a relationship between phytometric parameter values and target application rates, and wherein the target application rate data comprises a minimum application rate and corresponding phytometric parameter value and a maximum application rate and corresponding phytometric parameter value and wherein the relationship comprises a function defined based, at least, on the minimum application rate and corresponding phytometric parameter value and the maximum application rate and corresponding phytometric parameter value; and
determine the target application rate based, at least, on the phytometric parameter value of the target in the image and the target application rate data.

10. The agricultural application machine (100) of claim 9, wherein the instructions, when executed by the one or more processors (150, 224, 324, 620), further configure the application machine (100) to:
determine that the phytometric parameter value of the target in the image does not satisfy the phytometric parameter value corresponding to the minimum application rate; and
determine, as the target application rate, one of the minimum application rate, no application rate, a fixed application rate, or a scaled application rate.

11. The agricultural application machine (100) of claim 9 or 10, wherein the instructions, when executed by the one or more processors (150, 224, 324, 620), further configure the application machine (100) to:
determine that the phytometric parameter value of the target in the image does not satisfy the phytometric parameter value corresponding to the maximum application rate; and
determine, as the target application rate, one of the maximum application rate, no application rate, a fixed application rate, or a scaled application rate.

12. The agricultural application machine (100) of one of the claims 9 to 11, wherein the instructions, when executed by the one or more processors (150, 224, 324, 620), further configure the agricultural application machine (100) to:
determine that the phytometric parameter value of the target in the image is between the phytometric parameter value corresponding to the minimum application rate and the phytometric parameter value corresponding to the maximum application rate; and
determine the target application rate based on the minimum application rate and the maximum application rate.

13. The agricultural application machine (100) of one of the claims 9 to 12, further comprising an interface mechanism (154, 604) configured to present an interface (1095), the interface (1095) comprising:
a minimum application rate input mechanism configured to receive operator or user input to provide the minimum application rate;
a minimum phytometric parameter input mechanism configured to receive operator or user input to provide the phytometric parameter value corresponding to the minimum application rate;
a maximum application rate input mechanism configured to receive operator or user input to provide the maximum application rate; and
a maximum phytometric parameter input mechanism configured to receive operator or user input to provide the phytometric parameter value corresponding to the maximum application rate.

14. The agricultural application machine (100) of one of the claims 9 to 12, wherein the target application rate data further comprises an intermediary application rate and corresponding phytometric parameter value, between the minimum application rate and corresponding phytometric parameter value and the maximum application rate and corresponding phytometric parameter value,
wherein the relationship comprises a function defined based, at least, on the minimum application rate and corresponding phytometric parameter value, the intermediary application rate and corresponding phytometric parameter value, and the maximum application rate and corresponding phytometric parameter value,
and agricultural application machine (100) further comprises an interface mechanism (154, 604) configured to present an interface (1095), the interface (1095) comprising:
a minimum application rate input mechanism configured to receive operator or user input to provide the minimum application rate;
a minimum phytometric parameter input mechanism configured to receive operator or user input to provide the phytometric parameter value corresponding to the minimum application rate;
a maximum application rate input mechanism configured to receive operator or user input to provide the maximum application rate;
a maximum phytometric parameter input mechanism configured to receive operator or user input to provide the phytometric parameter value corresponding to the maximum application rate;
an intermediary application rate input mechanism configured to receive operator or user input to provide the intermediary application rate; and
an intermediary application rate input mechanism configured to receive operator or user input to provide the phytometric parameter value corresponding to the intermediary application rate.
